# EUROPEAN PATENT APPLICATION

(11) **EP 2 858 315 A1**
(43) Date of publication of application: **08.04.2015**
(21) Application number: 13796559.6
(22) Date of filing: 19.03.2013
(51) Int. Cl.: H04L 12/701, H04L 12/707, H04W 40/02

(54) **NETWORK SYSTEM, ROUTING CONTROL DEVICE, ROUTING CONTROL METHOD, AND NONTEMPORARY COMPUTER-READABLE MEDIUM FOR STORING PROGRAM**

(30) Priority: 31.05.2012 JP 2012125230
(71) Applicant: NEC Corporation, Tokyo 108-8001 (JP)
(72) Inventor: TAMURA, Toshiyuki, Tokyo 108-8001 (JP); SCHMID, Stefan, 69115 Heidelberg (DE)
(74) Representative: MacDougall, Alan John Shaw
(86) International application number: PCT/JP2013/001862
(87) International publication number: WO 2013/179542

(57) **Abstract**

An object is to provide a network system, a path control apparatus, a path control method, and a program that can realize flexible routing in a communication network. The network system according to the present invention is a network system including a base station (11), a gateway (12), and a path control apparatus (13) for controlling a communication path between the base station (11) and the gateway (12). The path control apparatus (13) is configured to perform path control on a path between the base station (11) and the gateway (12) using second identification information that is associated with first identification information for identifying a communication terminal (101) that communicates with the base station (11) and is uniquely identified inside a network system.

## Description

### Technical Field

The present invention relates to a network system, and in particular, to a network system in which flow control is executed.

### Background Art

In recent years, it has been suggested to realize a flexible system configuration by operating a plurality of virtual machines on one physical server. In such a system, obstacle avoidance, load distribution and the like are realized by live migration technology that moves virtual machines to another physical server or a memory region without stopping the virtual machines in operation.

Patent Literature 1 discloses a configuration in which, in a computer system where a plurality of computers are connected via a network, the computer system is managed using a VM (Virtual Machine) management apparatus and an OpenFlow controller in order to manage management of a network and management of computers in a unified manner. The OpenFlow controller switches a virtual machine for communication according to a MAC address in a packet to thereby reduce the time required to stop the virtual machine that is viewed from a network side associated with migration of the virtual machine.

The above-mentioned open controller is a technique, the standard specification of which is formulated by the OpenFlow consortium. In a network using the OpenFlow, central control on the network using an OpenFlow controller simplifies the operation of the network. Further, in the network using the OpenFlow, path control by the unit of flow can realize flexible routing, thereby improving fault tolerance.

### Citation List

### Patent Literature

Patent Literature 1: Japanese Unexamined Patent Application Publication No. 2011-070549

### Summary of Invention

### Technical Problem

As a network to be controlled using the OpenFlow, there is 3GPP (3rd Generation Partnership Project) EPS (Evolved Packet System) architecture. The EPS specified in the 3GPP technical specification is composed of LTE (Long Term Evolution), W-CDMA (Wideband Code Division Multiple Access), GERAN (GSM (registered trademark) EDGE Radio Access Network),high speed wireless communication realized by Non-3GPP access represented by WiFi (registered trademark) and a flexible core network provided by the EPC (Evolved Packet Core). In the 3GPP EPS architecture, an SGW (a Serving GW) that operates as a mobility anchor apparatus is disposed on a user data transmission path between a base station for communicating with terminals and a gateway apparatus (PGW: Packet Data Network GW) that is connected to an external network. That is, user data is transferred via any one of UE that indicates a mobile communication apparatus and a base station (eNB: eNodeB) used in LTE, a base station apparatus (RNS) used in W-CDMA, and a base station apparatus (BSS) used in GERAN, and SGW and PGW. When many processing apparatuses are disposed on the user data transmission path, there is a problem that OPEX (Operation Expence) and CAPEX (Capital Expence) costs increase, that is, excessive capital expenditure and operational expense are required, and also a problem that transmission of the user data is delayed. Thus, it has been desired to operate a network that introduces the OpenFlow capable of realizing the flexible routing into the 3GPP EPS architecture.

In order to solve such problems, an object of the present invention is to provide a network system, a path control apparatus, a path control method, and a program that can realize flexible routing in a communication network.

### Solution to Problem

An exemplary aspect of the present invention is a network system including: a base station; a gateway; and path control means for controlling a communication path between the base station and the gateway. The path control means is configured to perform path control on a path between the base station and the gateway using second identification information, and the second identification information is associated with first identification information for identifying a communication terminal that communicates with the base station and is uniquely identified inside the network system.

A second exemplary aspect of the present invention is a path control apparatus for controlling a communication path between a base station and a gateway. The path control apparatus performs path control on a path between the base station and the gateway using second identification information, and the second identification information is associated with first identification information for identifying a communication terminal that communicates with the base station and is uniquely identified inside the network system.

A third exemplary aspect of the present invention is a path control method for controlling a base station, a gateway, and a communication path between the base station and the gateway. The path control method includes performing path control on a path between the base station and the gateway using second identification information. The second identification information is associated with first identification information for identifying a communication terminal that communicates with the base station and is uniquely identified inside a network system including the base station and the gateway.

A fourth exemplary aspect of the present invention is a program for causing a computer to execute control on a base station, a gateway, and a communication path between the base station and the gateway. The program includes a step of: performing path control on a path between the base station and the gateway using second identification information. The second identification information is associated with first identification information for identifying a communication terminal that communicates with the base station and is uniquely identified inside a network system including the base station and the gateway.

### Advantageous Effects of Invention

According to the present invention, it is possible to provide a network system, a path control apparatus, a path control method, and a program that can realize flexible routing in a communication network.

### Brief Description of Drawings

Fig. 1 is a block diagram of a network system according to a first exemplary embodiment;
Fig. 2 is a block diagram of a network system according to the first exemplary embodiment;
Fig. 3 is a diagram for explaining a routing control method according to the first exemplary embodiment;
Fig. 4 is a configuration diagram of packet data according to the first exemplary embodiment;
Fig. 5 is a configuration diagram of the packet data according to the first exemplary embodiment;
Fig. 6 is a block diagram of the network system according to the first exemplary embodiment;
Fig. 7 is a block diagram of the network system according to the first exemplary embodiment;
Fig. 8 is a diagram for explaining a protocol stack according to the first exemplary embodiment;
Fig. 9 is a diagram for explaining a protocol stack according to the first exemplary embodiment;
Fig. 10 is a diagram for explaining an arrangement of Routers between eNB and PGW according to the first exemplary embodiment;
Fig. 11 is a diagram for explaining an IP address according to the first exemplary embodiment;
Fig. 12 is a diagram for explaining routing information that is used in path selection according to the first exemplary embodiment;
Fig. 13 is a diagram for explaining a flow of attach processing of UE (User Equipment) according to the first exemplary embodiment;
Fig. 14 is a diagram for explaining update processing of a routing policy in the Router according to the first exemplary embodiment;
Fig. 15 is a diagram for explaining a flow of processing at the time of connecting to an APN other than a default APN according to the first exemplary embodiment;
Fig. 16 is a diagram for explaining a flow of path control processing at the time of handover according to the first exemplary embodiment;
Fig. 17 is a diagram for explaining a flow of the path control processing at the time of handover according to the first exemplary embodiment;
Fig. 18 is a diagram for explaining routing paths of user traffic before and after handover processing and during handover according to the first exemplary embodiment;
Fig. 19 is a diagram for explaining a flow of path control processing at the time of handover when an MME is changed according to the first exemplary embodiment;
Fig. 20 is a diagram for explaining a flow of the path control processing at the time of handover when the MME is changed according to the first exemplary embodiment;
Fig. 21 is a diagram for explaining a flow of path control processing at the time of handover that is executed between eNBs according to the first exemplary embodiment;
Fig. 22 is a diagram for explaining a flow of the path control processing at the time of handover that is executed between the eNBs according to the first exemplary embodiment;
Fig. 23 is a diagram for explaining a flow of processing when the UE transitions to an Idle state according to the first exemplary embodiment;
Fig. 24 is a diagram for explaining a flow of NW Triggered Service Request processing according to the first exemplary embodiment;
Fig. 25 is a diagram for explaining a flow of the NW Triggered Service Request processing according to the first exemplary embodiment;
Fig. 26 is a block diagram of a network system when eNB and PGW are the same apparatus or disposed close to each other in terms of geography and a network topology according to a second exemplary embodiment;
Fig. 27 is a block diagram of a network system when RNC and PGW are the same apparatus or disposed close to each other in terms of geography and a network topology according to the second exemplary embodiment;
Fig. 28 is a block diagram of a network system when RNC and GGSN are the same apparatus or disposed close to each other in terms of geography and a network topology according to the second exemplary embodiment;
Fig. 29 is a block diagram of a network system when eNB and PGW are the same apparatus or disposed close to each other in terms of geography and a network topology according to the second exemplary embodiment;
Fig. 30 is a block diagram of a network system when RNC and PGW are the same apparatus or disposed close to each other in terms of geography and a network topology according to the second exemplary embodiment; and
Fig. 31 is a block diagram of a network system when RNC and GGSN are the same apparatus or disposed close to each other in terms of geography and a network topology according to the second exemplary embodiment.

### Description of Embodiments

### (First exemplary embodiment)

Hereinafter, exemplary embodiments of the present invention shall be explained with reference to the drawings. The present invention can be applied to OpenFlow, VXLAN (Virtual extensible Local Area Network), NVGRE (Network Virtualization using Generic Routing), DOVE, Cisco NEXUS, Juniper QFabric (registered trademark) and the like. In the following exemplary embodiments, an example using the OpenFlow shall be mainly explained. Firstly, a configuration example of a network system according to a first exemplary embodiment shall be explained.

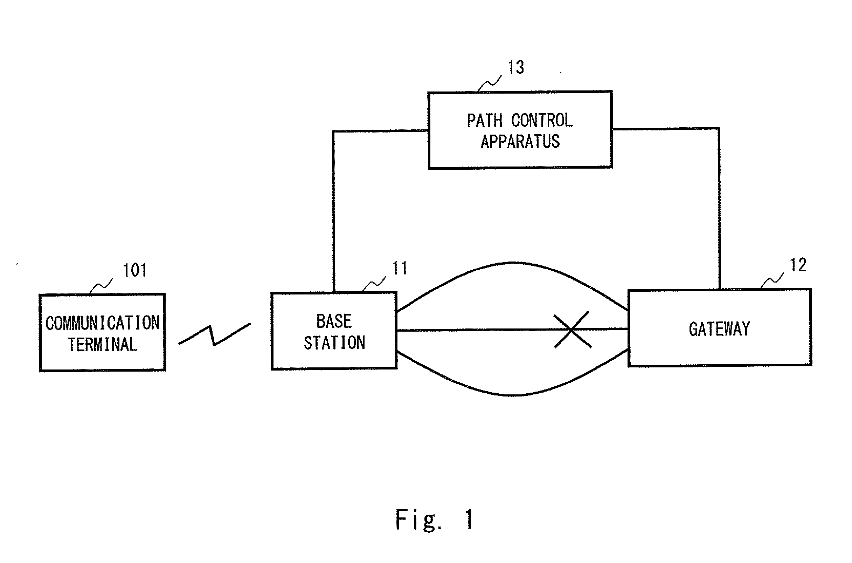

The network system of Fig. 1 includes a base station 11, a gateway 12, and a path control apparatus 13. The base station 11 is an apparatus mainly used in a mobile communication network and performs wireless communication with a communication terminal 101. The gateway 12 relays communications between a communication apparatus inside the mobile communication network and an external network, which is different from the mobile communication network. The external network may be, for example, a mobile communication network that is different from the mobile communication network to which the base station 11 belongs and may be an IP network or the like that is managed by, for example, a provider.

The path control apparatus 13 controls a communication path between the base station 11 and the gateway 12. Specifically, the path control apparatus 13 performs path control using first identification information for identifying the communication terminal 101 that communicates with the base station 11 and second identification information that is associated with the first identification information and uniquely identified inside the mobile communication network. The first and second identification information may be, for example, IP addresses. Further, the first identification information may be information that combines identification information related to a plurality of layers. For example, the first identification information may be information that combines an IP address and information for identifying a wireless channel. Further, the second identification information may be, for example, apparatus identification information for identifying an apparatus and flow identification information for identifying a flow. The apparatus identification information and the flow identification information may be indicated by using a label and the like.

As has been explained, by using the path control apparatus 13 in the network system of Fig. 1, a path between the base station 11 and the gateway 12 can be flexibly configured. When a failure occurs in an apparatus which is between the base station 11 and the gateway 12, by configuring a communication path while circumventing a failure spot, it is possible to secure the communication path between the base station 11 and the gateway 12.

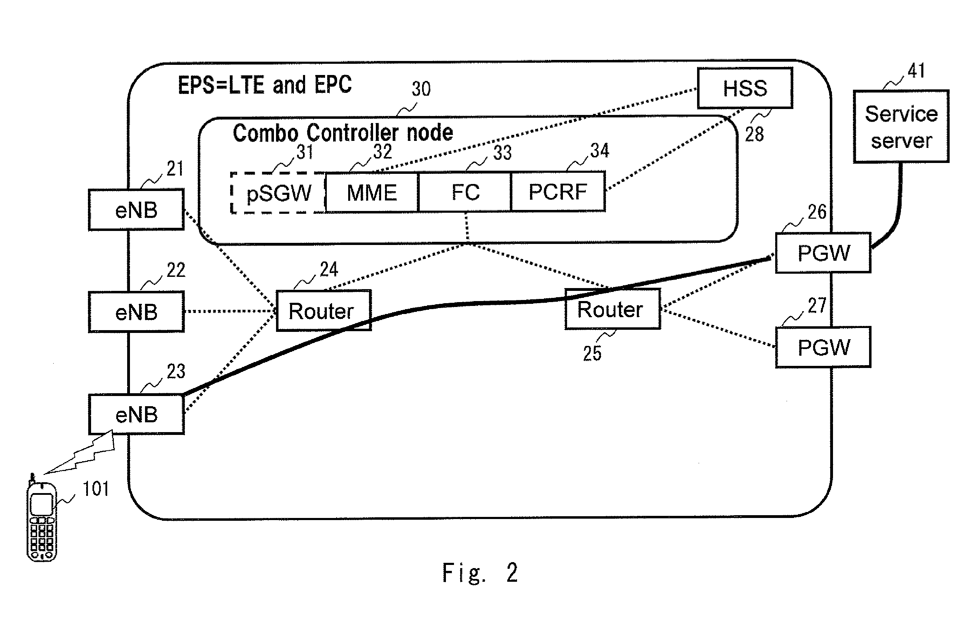

Next, a configuration example of a network system that is defined by 3GPP shall be explained using Fig. 2. The network system shown in Fig. 2 is composed of eNBs (eNodeB) 21 to 23, Routers 24 and 25, PGWs 26 and 27, an HSS (Home Subscriber Server) 28, a Combo Controller node (hereinafter referred to as a combo node) 30, and a Service Server 41. The eNBs 21 to 23, the Routers 24 and 25, the PGWs 26 and 27, the HSS 28, and the combo node 30 constitute a 3GPP EPS (Evolved Packet System) architecture.

The combo node 30 includes a pSGW (pseudo-Serving gateway) 31, an MME (Mobile Management Entity) 32, an FC (Flow Controller) 33, and a PCRF (Policy and Charging Rules Function) 34.

The eNBs 21 to 23 are base stations that communicate with the communication terminal 101 using the LTE scheme that is specified by 3GPP as a wireless scheme. The communication terminal 101 includes a mobile communication terminal such as a cell phone terminal and a terminal used in MTC (Machine Type Communication). The terminal used in MTC may be, for example, a terminal that moves less frequently, such as a vending machine with a wireless communication function.

The PGWs 26 and 27 are logical nodes having an interface function between an EPS and the Service server 41 that is disposed in the External network. That is, transmission and reception of data between a communication apparatus inside the EPS and the Service server 41 is performed via the PGW 26 or 27.

The Service server 41 is a server apparatus disposed inside the External network and, for example, a Web server, a storage apparatus and the like that stores video data.

The Routers 24 and 25 perform data transmission between the eNBs 21 to 23 and the PGWs 26 and 27. The Router 24 is connected to the eNBs 21 to 23, receives data transmitted from the eNBs 21 to 23, and distributes data addressed to the eNBs 21 to 23 to the eNBs 21 to 23. The Router 25 is connected to the PGWs 26 and 27, receives data transmitted from the PGWs 26 and 27, and distributes data addressed to the PGWs 26 and 27 to the PGWs 26 and 27.

Although only the Routers 24 and 25 are illustrated in Fig. 2, three or more Routers may be disposed to enable route selection between the eNBs 21 to 23 and the PGWs 26 and 27. Further, the plurality of Routers disposed between the eNBs 21 to 23 and the PGWs 26 and 27 may be connected in a meshed manner. There are the following benefits from connecting the plurality of Routers that are disposed between the eNBs 21 to 23 and the PGWs 26 and 27 in a meshed manner.

When the eNBs 21 to 23 and the PGWs 26 and 27 are connected using a three-tier structure as a hierarchical structure, for example, the eNBs 21 and 22 are connected to the PGW 26 via a gateway such as SGW and SGSN (Serving GPRS Support Node), and the eNB 23 is connected to the PGW 27 via a gateway such as SGW and SGSN. Note that the eNB 21 and the SGW are connected via a Router, and the SGW and the PGW are also connected via a Router. In this case, when a failure occurs in the gateway such as the SGW and the SGSN, the communication between the eNBs 21 to 23 and the PGWs 26 and 27 may not be maintained. On the other hand, by connecting the Routers disposed between the eNBs 21 to 23 and the PGWs 26 and 27 in a meshed manner, even when a failure occurs at any point between the eNBs 21 to 23 and the PGWs 26 and 27, the communication between the eNBs 21 to 23 and the PGW 26 or 27 can be maintained by circumventing the failure spot..

The combo node 30 updates a routing table and the like of the Routers that are disposed between the eNBs 21 to 23 and the PGWs 26 and 27 and performs path control between the eNBs 21 to 23 and the PGWs 26 and 27. The path control between the eNBs 21 to 23 and the PGWs 26 and 27 is mainly executed using the FC 33.

The routing table may be managed by associating, for example, an IP address that is allocated to a communication terminal and the Flow Label that is assigned to the eNB or the PGW with destination information. For example, the Routers 24 and 25 may hold the routing table indicating that data is transmitted to the eNB 21 when the IP address of the destination communication terminal is IP address #A and the Flow Label of the destination eNB is Flow Label #A. Further, the Routers 24 and 25 may hold the routing table indicating that data is transmitted to the eNB 22 when the IP address of the destination communication terminal is the IP address #A and the Flow Label of the destination eNB is the Flow Label #B. Furthermore, the Routers 24 and 25 may hold the routing table indicating that data is transmitted to the PGW 26 when the IP address of the communication terminal is an arbitrary IP address and the Flow Label is Flow Label #C. That is, the communication path between the eNB and the PGW may be configured using only the Flow Label regardless of the IP address of the communication terminal.

The Flow Label is a Label managed by the FC 33 that is an OpenFlow controller. The FC 33 manages the Flow Label so as to uniquely identify each apparatus. Moreover, the Routers 24 and 25 are Flow Routers (FR) that are controlled by the OpenFlow controller and enable execution of routing based on the Flow Label together with the IP address.

Next, an outline of functions of the pSGW 31, the MME 32, and the PCRF 34 that are included in the combo node 30 shall be explained. The pSGW 31 is used to transmit an incoming message to the communication terminal 101. When an incoming message is generated for the communication terminal 101, the MME 32 transmits a paging signal to the communication terminal 101 that belongs to a cell managed by any one of the eNBs 21 to 23. When an incoming message is generated for the communication terminal 101, the incoming message to the communication terminal 101 is transmitted using the pSGW 31 as a destination. The combo node 30 then receives the incoming message that is addressed to the pSGW 31. Next, the MME 32 transmits a paging signal to the eNBs 21 to 23 in order to call the communication terminal 101. When the communication terminal 101 that is connected to any one of the eNBs 21 to 23 receives the paging signal, the communication terminal 101 transmits a response signal to the MME 32 via the connected eNB. By doing so, the MME 32 will know which eNB the communication terminal 101 is connected to. The MME 32 notifies the pSGW 31 of the eNB which the communication terminal 101 is connected to. The pSGW 31 transmits the incoming message to the communication terminal 101 via the eNB sent from the MME 32. By using the pSGW 31 in this way, incoming processing can be performed on the communication terminal 101.

The PCRF 34 executes policy control and charging control. The PCRF 34 may notify, for example, the eNB 21, the PGW 26 or the like of policy control information that is applied to data transmission. The eNB 21, the PGW 26 or the like executes data transmission based on the policy control information sent from the PCRF 34.

Next, the HSS 28 shall be explained. The HSS 28 is an apparatus for managing subscriber information of the communication terminal 101 and the like. The HSS 28 may further manage identification information and the like of the MME that manages the eNB on which the communication terminal 101 camps.

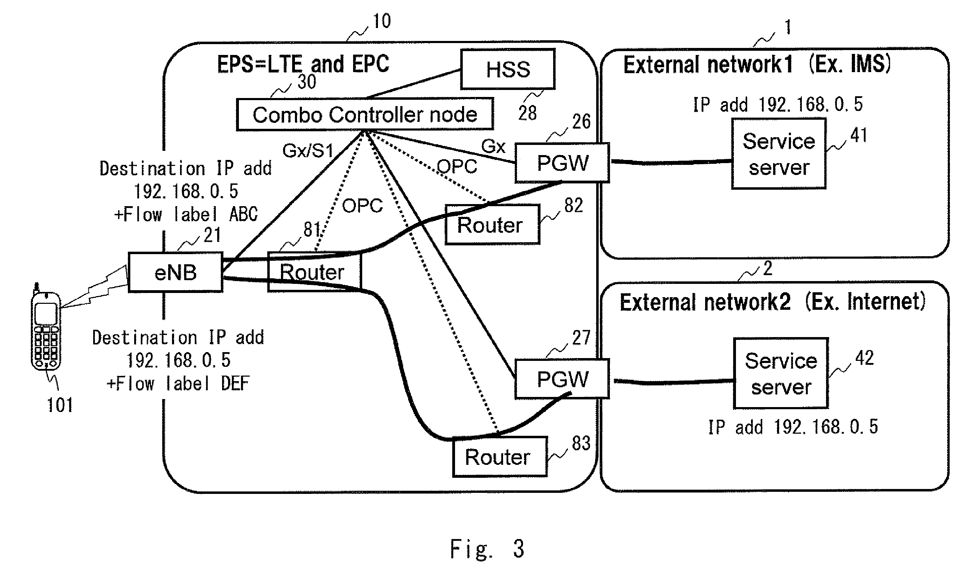

A benefit from performing the above-mentioned routing control using the combo node 30 shall be explained using Fig. 3.

A network system shown in Fig. 3 is composed of an EPS 10, an External network 1, and an External network 2. The EPS 10, as has been explained using Fig. 2, includes the eNB 21, the PGWs 26 and 27, the HSS 28, and the Combo Controller 30. The EPS 10 further includes Routers 81 to 83 for performing data transmission between the eNB 21 and the PGWs 26 and 27.

The External network 1 includes the Service Server 41. The External network 1 may be, for example, an IMS (IP Multimedia Subsystem). The External network 2 includes a Service Server 42. The External network 2 is, for example, a network managed by a provider and may be a network on the so-called Internet. Suppose that the Service Servers 41 and 42 have the same IP address. The IP address of the Service Servers 41 and 42 may be set as, for example, 192.168.0.5. Further, Flow Label ABC is allocated to the PGW 26, while Flow Label DEF is allocated to the PGW 27.

When the data transmission is performed using the IP address allocated to the communication terminal, and the same IP address exists in different networks, the communication terminal cannot be uniquely identified. However, by using the Flow Label in this case, the communication terminal can be uniquely identified. When the destination IP address 192.168.0.5 and the Flow Label: ABC are set to a packet, the Routers 81 to 83 transfer the packet to the PGW 26. The PGW 26 then transmits the packet to the Service Server 41 based on the destination IP address: 192.168.0.5.

When the destination IP address: 192.168.0.5 and Flow Label: DEF are set to a packet, the Routers 81 to 83 transfer the packet to the PGW 27. The PGW 27 then transmits the packet to the Service Server 42 based on the destination IP address: 192.168.0.5.

In this manner, even when the destination IP address overlaps, by using the Flow Label that is uniquely identified inside the EPS, the communication terminal can be identified, and the data can be transmitted.

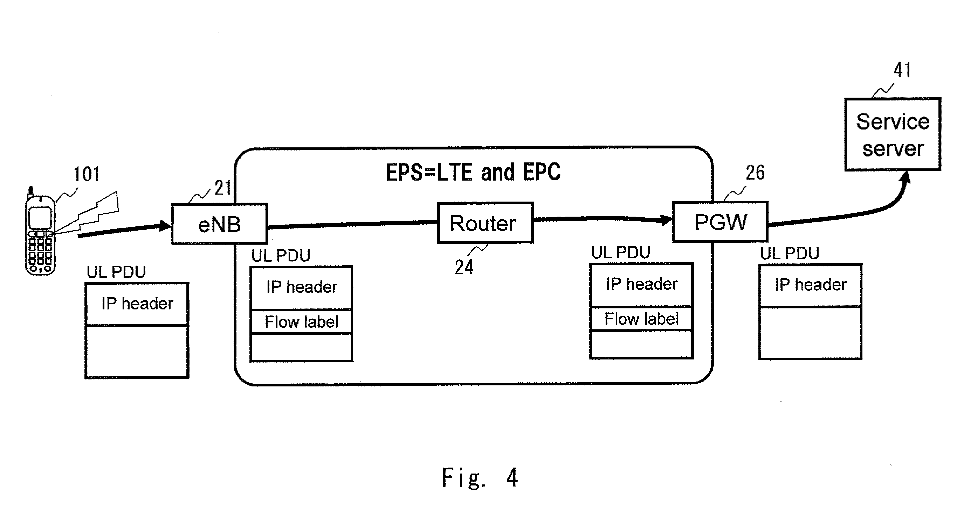

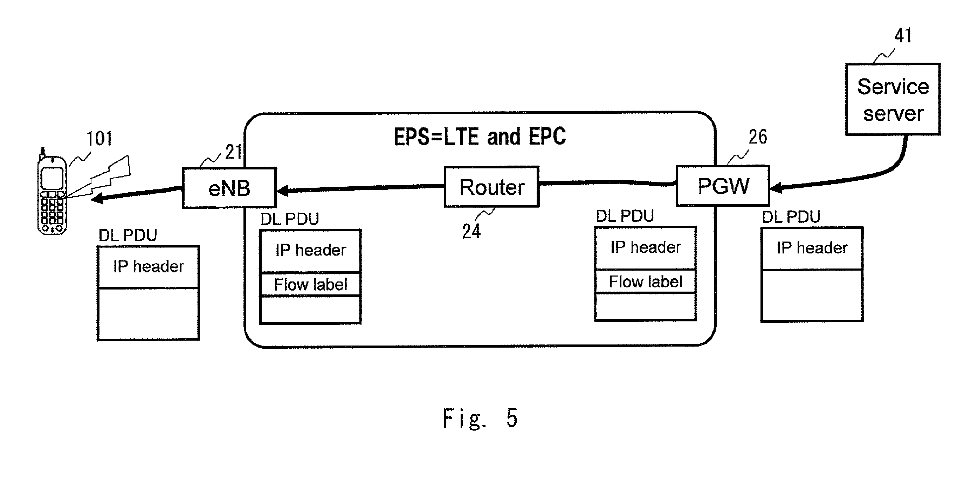

Next, a configuration example of packet data shall be explained using Figs. 4 and 5. Firstly, an example of Up Link traffic shall be explained using Fig. 4. The Up Link traffic indicates data transmitted from the communication terminal to the mobile communication network. The communication terminal 101 sets the IP address that identifies the Service Server 41 to an IP header. Further, the communication terminal 101 transmits packet data to the eNB 21. The eNB 21 then sets a Flow Label for identifying the PGW 26 to the received packet data and transmits the packet data to the Router 24. The eNB 21 may manage a correspondence table between the destination IP addresses and Flow Labels and set the Flow Label corresponding to the IP address that has been set to the received packet data. Alternatively, the eNB 21 may obtain the Flow Label from the combo node 30.
When there are a plurality of IP addresses, the Flow Label that has been set to the PGW may be selected based on an APN (Access Point Name) specified by the communication terminal 101.

The Router 24 transmits the packet data to the PGW 26 based on the IP address and the Flow Label that have been set to the packet data. The PGW 26 removes the Flow Label from the received packet data when it is necessary to remove the Flow Label and transmits the packet data, from which the Flow Label has been removed, to the Service Server 41.

An example of Down Link traffic shall be explained using Fig. 5. The Down Link traffic indicates data that is transmitted from the mobile communication network to the communication terminal 101. The Service Server 41 sets the IP address for identifying the communication terminal 101 to the IP header. Further, the Service Server 41 transmits packet data to the PGW 26. The PGW 26 further sets Flow Label for identifying the eNB 21 to the received packet data and transmits the packet data to the Router 24. The PGW 26 may manage a correspondence table between the destination IP addresses and Flow Labels and set the Flow Label corresponding to the IP address that has been set to the received packet data. Alternatively, the PGW 26 may obtain the Flow Label from the combo node 30.

The Router 24 transmits the packet data to the eNB 21 based on the IP address and the Flow Label that have been set to the packet data. The eNB 21 removes the Flow Label from the received packet data when it is necessary to remove the Flow Label and transmits the packet data, from which the Flow Label has been removed, to the communication terminal 101.

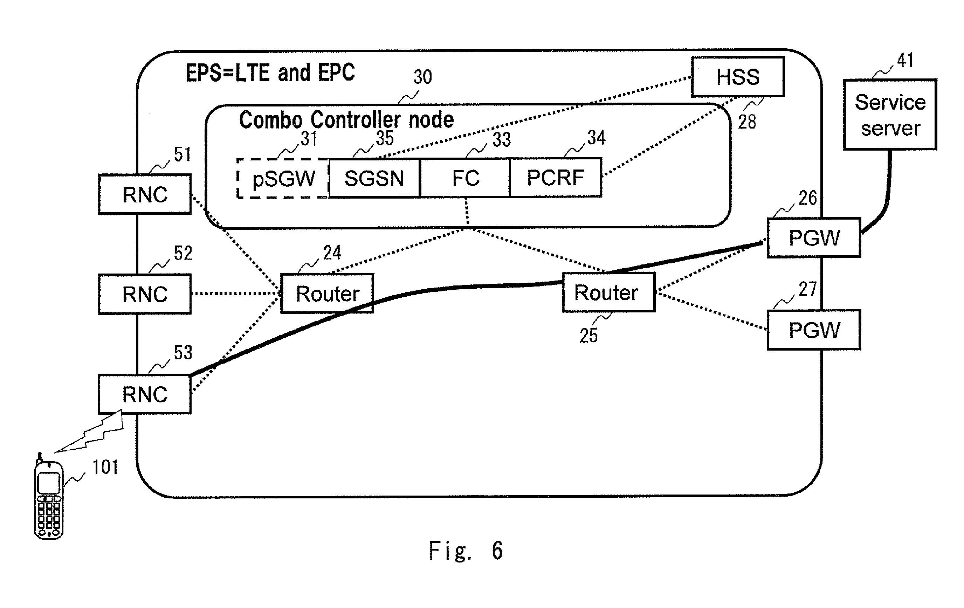

Next, a configuration example of a network system defined by 3GPP that is different from the network system shown in Fig. 2 shall be explained using Fig. 6. In the network system shown in Fig. 6, RNCs (Radio Network Controllers) 51 to 53 are used in place of the eNBs 21 to 23 shown in Fig. 2. Further, in the network system shown in Fig. 6, an SGSN 35 is used in place of the MME 32 shown in Fig. 2. The RNCs 51 to 53 control base stations used mainly in a 3G system. For example, the RNCs 51 to 53 perform handover control and the like between base stations. The SGSN 35 is connected to a wireless access system that is used in the 3G system and performs data processing on U-Plane data and C-Plane data. As the remaining configuration in Fig. 6 is the same as the configuration in Fig. 2, a detailed explanation of the remaining configuration in Fig. 6 shall be omitted.

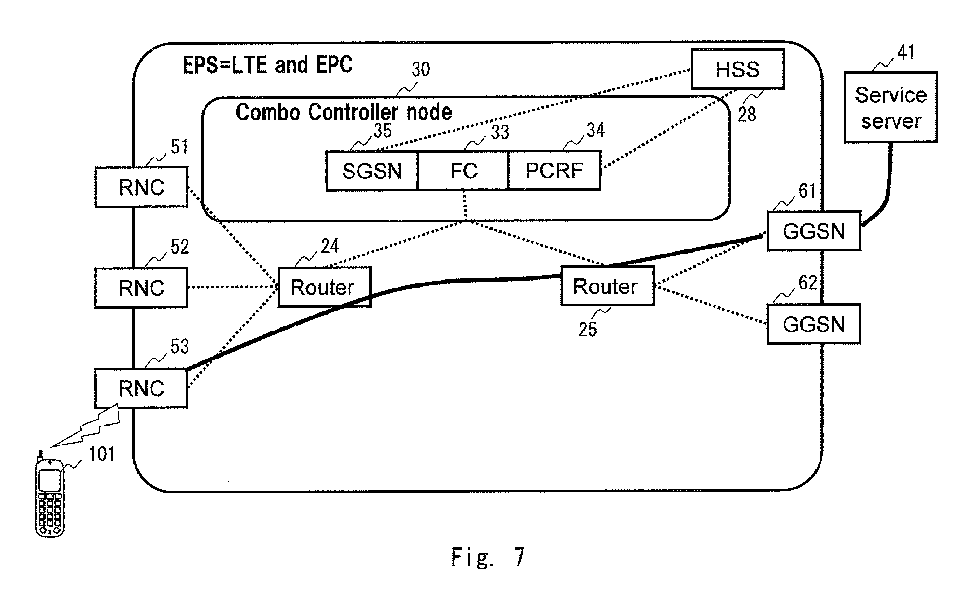

Next, a configuration example of a network system defined by 3GPP that is different from the network systems shown in Figs. 2 and 6 shall be explained using Fig. 7. In the network system shown in Fig. 7, GGSNs (Gateway GPRS Support Node) 61 and 62 are used in place of the PGWs 26 and 27 shown in Fig. 6. Unlike the combo node 30 shown in Fig. 6, the network system shown in Fig. 7 does not include the pSGW 31 in the combo node 30. The GGSNs 61 and 62 are logic nodes including an interface function to the External network, and the function is defined in the 3GPP technical specification. Moreover, the GGSNs 61 and 62 do not communicate with the SGW. For this reason, the pSGW 31 is not included in the combo node 30. In Fig. 7, processing regarding the incoming message that is responsible for the pSGW 31 is performed by the SGSN 35. As the remaining configuration in Fig. 7 is the same as the configuration in Fig. 6, a detailed explanation of the remaining configuration in Fig. 7 shall be omitted. Further, by using a BSC (Base Station Controller) in place of the RNCs 51 to 53, the present invention can be applied to a so-called 2G system.

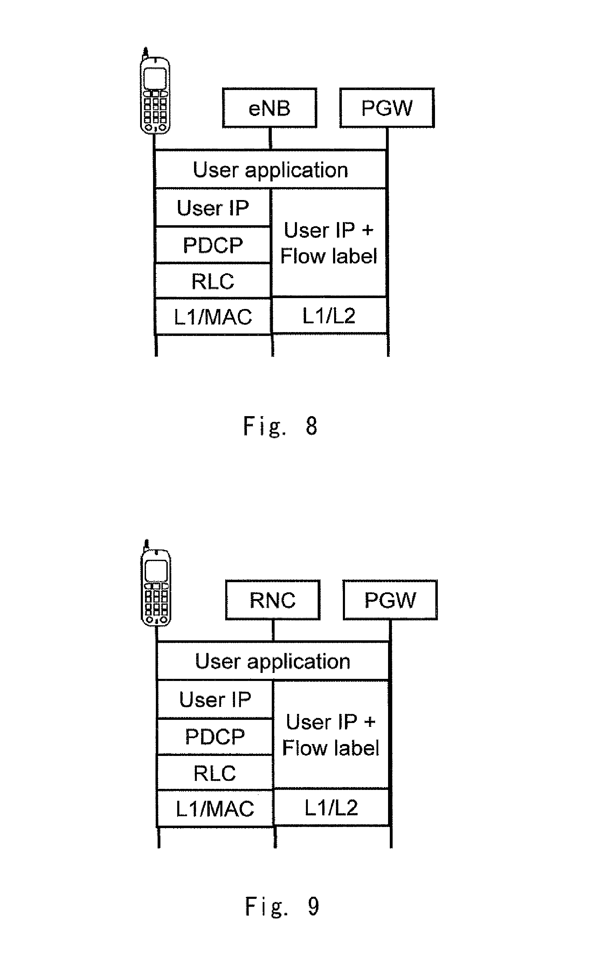

Next, a protocol stack between the communication terminal, the eNB, and the PGW shall be explained using Fig. 8. L1/MAC that is used between the communication terminal and the eNB is associated with L1/L2 that is used between the eNB and the PGW. Further, RLC (Radio Link Control), PDCP (Packet Data Control Protocol), and User IP that are used between the communication terminal and the eNB are associated with User IP+Flow label that is used between the eNB and the PGW. User application is not processed at the eNB and transmitted. In Fig. 9, RNC is used in place of the eNB in Fig. 8, and the protocol stack is the same as the one in Fig. 8. Note that GGSN may be used in place of the PGW.

The User IP+Flow label is identification information that is uniquely identified inside the EPS. Specifically by using the protocol stacks shown in Figs. 8 and 9, the User IP+Flow label that is uniquely identified inside the EPS is used at the time of performing the path control between the eNB or the RNC and the PGW. When the User IP+Flow label is used, it is not necessary to use the User IP, the PDCP, the RLC, and information of a plurality of layers, thus it is possible to simplify the processing by an apparatus that is disposed between the eNB or the RNC and the PGW. However, when the communication terminal is uniquely identified inside the EPS only by the User IP, the Flow label may be unnecessary.

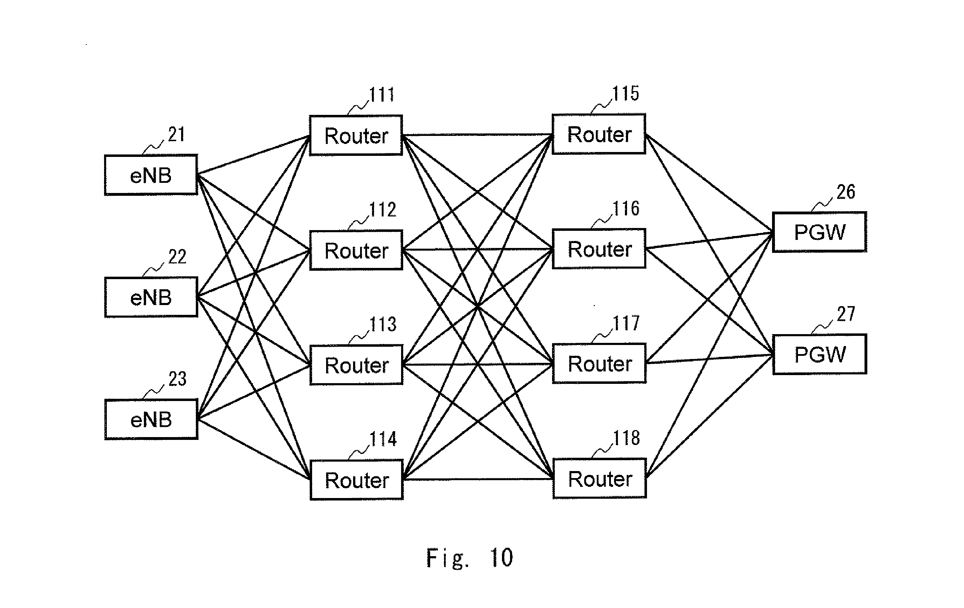

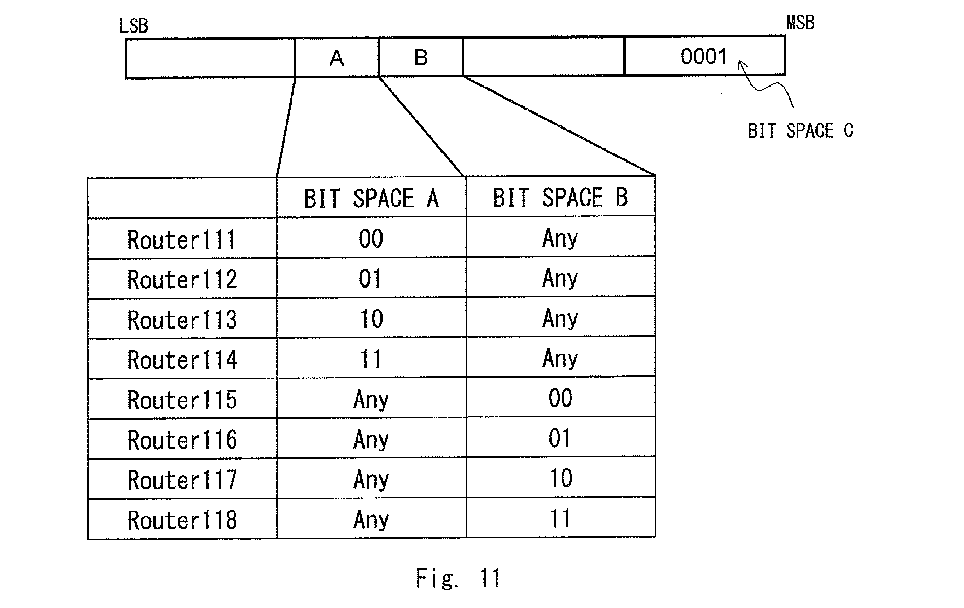

Next, a path control method between the eNB and the PGW shall be explained using Figs. 10 and 11. Fig. 10 is a configuration example of a network system in which Routers 111 to 118 are disposed between the eNBs 21 to 23 and the PGWs 26 and 27. Each of the eNBs 21 to 23 are connected to each of the Routers 111 to 114. Each of the PGWs 26 and 27 are connected to each of the Routers 115 to 118. Further, the Router 111 is connected to the Routers 115 to 118. Similarly, each of the Routers 112 to 114 is connected to each of the Routers 115 to 118.

Fig. 11 shows a configuration example of an IP address that is allocated to the eNBs 21 to 23 and the PGWs 26 and 27 in the case in which NAT Routing is performed inside the EPS. The IP address includes bit spaces A and B for identifying passing routers and a bit space C for identifying the eNBs 21 to 23 and PGWs 26 and 27. The bit spaces A to C are set at arbitrary positions in the IP address.

As for the eNB 21, for example, 0001 is set to the least significant four bits that are defined as the bit space C. When the path is via the Router 111, two bits 00 are set to the bit space A. Similarly, when path is via the Routers 112 to 114, 01 to 11 are set to the bit space A. When the path is via the Router 115, two bits 00 are set to the bit space B. Likewise, when the path is via the Routers 116 to 118, 01 to 11 are set to the bit space B. By combining these bit spaces, a plurality of IP addresses with different combinations of the bit spaces A and B are allocated to the eNB 21. Similarly for the eNBs 22 and 23 and the PGWs 26 and 27, a plurality of IP addresses with different combinations of the bit spaces A and B are allocated.

For example, the destination IP address when data is transmitted from the PGW 26 to the eNB 21 shall be explained. When the Router 111 and the Router 115 are used as Routers between the PGW 26 and the eNB 21, the PGW 26 sets 00 to the bit space A, sets 00 to the bit space B, and sets 0001 to the bit space C as the destination IP addresses. By configuring the IP destination address in this manner, the PGW 26 transmits packet data to the Router 115 based on the bit space B. Further, the Router 115 transmits the packet data to the Router 111 based on the bit space A. Furthermore, the Router 111 transmits the packet data to the eNB 21 based on the bit space C.

The seven bits of the bit spaces A+B+C may be used as the Flow label. The paths between the eNBs 21 to 23 and the PGWs 26 and 27 are selected using the Flow label that has been set in the above way. In the Down Link traffic, the eNBs 21 to 23 change the IP addresses, which are allocated to the eNBs 21 to 23 that are set to the Destination IP addresses of the IP header by the NAT function, to the User IP address, which is allocated to the communication terminal 101, and transmit packet data to the communication terminal 101. Further, in the Up Link traffic, in a manner similar to that of the above case, the PGWs 26 and 27 change the IP address, which is allocated to the PGW 26 or 27 that is set to the Destination IP address of the IP header by the NAT function, to the Destination IP address, which is allocated to the Service Server 41, and transmits packet data to the Service Server 41.

An example of the path change method using the combo node 30 shall be explained below. For example, when a failure occurs in the Router 111, the combo node 30 may transmit an instruction signal to the Routers 115 to 118 for instructing a rewrite of the bit space A to 01 in the Flow label, the bit space A of which has been set to 00. Then, the path between the PGW 26 and the eNB 21 is changed to the path that passes through the Router 112 instead of the path passing through the Router 111 in which a failure occurs.

Although in the above example, the seven bits of the bit spaces A+B+C are used as the Flow label, a 32-bit IP address including the seven bits of the bit spaces A+B+C may be used as the Flow label. As the 32-bit IP address including the seven bits of the bit spaces A+B+C is uniquely identified inside the EPS, it is defined as Global IP inside the EPS. An address format of the Global IP may be a Private IP that is used inside a closed space and may be a so-called Global IP that is uniquely identified from among all users that are connected to the Internet.

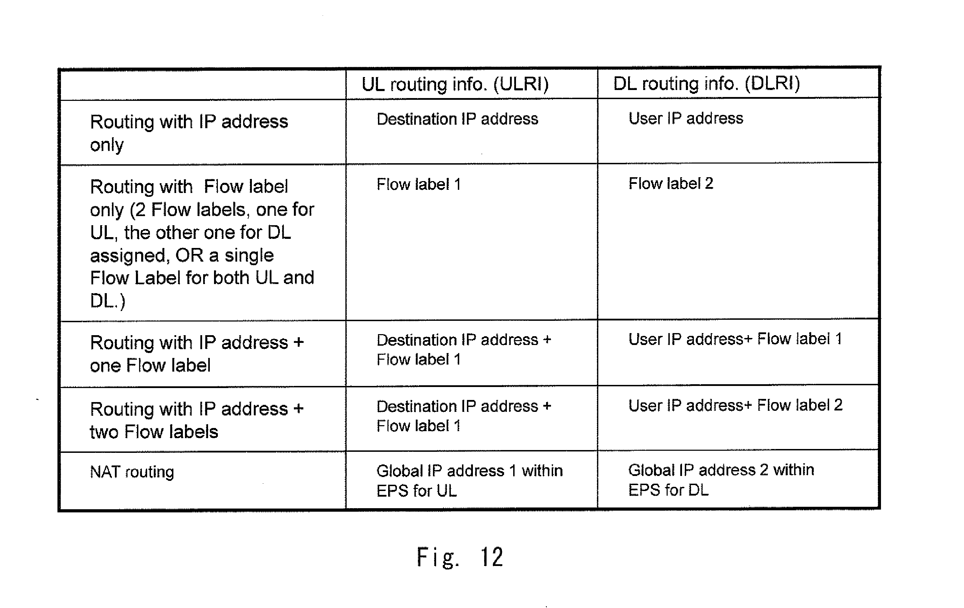

Next, an example of routing information (RI) that is used for path selection between the eNBs 21 to 23 and the PGWs 26 and 27 shall be explained using Fig. 12. UP Link (UL) routing shall be a data communication flowing in a direction from the eNBs 21 to 23 to the PGWs 26 and 27, while DOWN Link (DL) routing shall be a data communication in a direction from the PGWs 26 and 27 to the eNBs 21 to 23. Further, the IP address allocated to the communication terminal 101 shall be a User IP address, while the IP address allocated to the Service Server 41 shall be a Destination IP address.

Firstly, when the Destination IP address and the User IP address do not overlap and are uniquely identified in a plurality of networks, the UL routing information (ULRI) that is used for path selection between the eNBs 21 to 23 and the PGWs 26 and 27 will be the Destination IP address. Moreover, when the Destination IP address and the User IP address do not overlap and are uniquely identified, the DL routing information used for path selection between the eNBs 21 to 23 and the PGWs 26 and 27 will be the User IP address.

Next, when there is a possibility that the Destination IP address and the User IP address overlap, and only the Flow label is used for path selection between the eNBs 21 to 23 and the PGWs 26 and 27, Flow label 1 is used as the ULRI and the Flow label 2 is used as the DLRI.

Next, when there is a possibility that the Destination IP address and the User IP address overlap, and the IP address and one Flow label are used for path selection between the eNBs 21 to 23 and the PGWs 26 and 27, the Destination IP address and the Flow label 1 are used as the ULRI and the User IP address and the Flow label 1 are used as the DLRI.

Next, when there is a possibility that the Destination IP address and the User IP address overlap, and the IP address and two Flow labels are used for path selection between the eNBs 21 to 23 and the PGWs 26 and 27, the Destination IP address and the Flow label 1 are used as the ULRI and the User IP address and the Flow label 2 are used as the DLRI.

Next, when there is a possibility that the Destination IP address and the User IP address overlap, and NAT routing is performed, Global IP address 1 is used as the ULRI and Global IP address 2 is used as the DLRI.

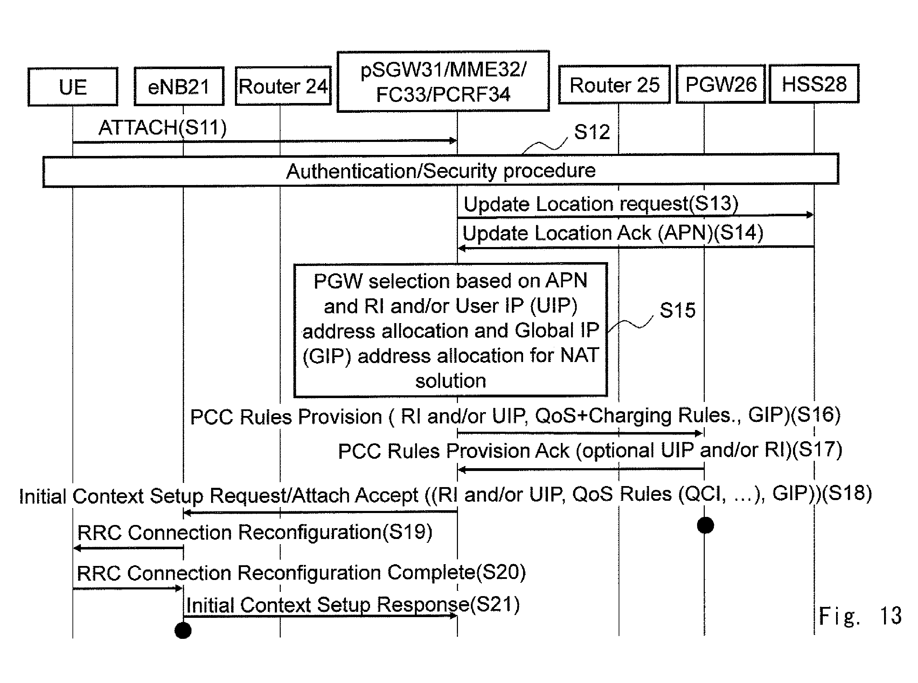

Next, a flow of attach processing of UE (User Equipment) according to the first exemplary embodiment of the present invention shall be explained using Fig. 13. The UE is a name indicating a mobile communication apparatus or the like that is used in the 3GPP system. Further, in this drawing, the pSGW 31, the MME 32, the FC 33, and the PCRF 34 are configured using the same apparatus. An apparatus configured using the pSGW 31, the MME 32, the FC 33, and the PCRF 34 shall be referred to as a combo node.

Firstly, the UE transmits an ATTACH signal to the combo node (the MME 32) so as to request a registration in a mobile communication network (S11). The term combo node (the MME 32) indicates that the function of the MME 32 in the combo node is used. The terms combo node (the FC 33) and combo node (the pSGW 31) described below also indicate that the functions of the FC 33 and the pSGW 31 are used, respectively. Next, the combo node (the MME 32) executes authentication processing and the like on the UE that has transmitted the ATTACH signal (Authentication/Security procedure; S12).

Next, the combo node (the MME 32) transmits an "Update Location request" to the HSS (Home Subscriber Server) 28 in order to obtain subscriber information and the like of the UE (S13). The HSS 28 transmits an "Update Location Ack" as a response signal to the "Update Location request" (S14). The "Update Location Ack" includes information regarding an APN (Access Point Name) to which the UE is connected.

Next, the combo node (the MME 32) selects the PGW to which the UE is connected based on APN information (S15). Specifically, the combo node (the MME 32) extracts an IP address of the PGW corresponding to the APN sent from HSS 28. Further, the combo node (the MME 32) determines routing information (RI) and a User IP (UIP) address for identifying the UE. The routing information (RI) includes the ULRI and the DLRI that has been explained using Fig. 12. The combo node (the MME 32) may further extract a Global IP (GIP) address that is used to execute the NAT function. The GIP includes, for example, a GIP for identifying the eNB 21 and a GIP for identifying the PGW 26.

Next, the combo node (the PCRF 34) transmits a "PCC Rules Provision" to the PGW 26 in order to establish an EPS bearer between the UE and the PGW 26 (S16). The "PCC Rules Provision" includes the RI and the UIP that are determined by the combo node (the MME 32). The "PCC Rules Provision" may further include QoS and Charging information which will be applied. The "PCC Rules Provision" may include the GIPs for identifying the eNB 21 and the PGW 26 that are used to execute the NAT function. The PGW 26 transmits a "PCC Rules Provision Ack" to the combo node (the PCRF 34) as a response signal to the "PCC Rules Provision" (S17). In Fig. 13, although an example in which the RI, the UIP and the like are determined by the combo node (the MME 32), when the RI, the UIP and the like are determined by the PGW 26, the RI, the UIP and the like that are extracted by the PGW 26 may be set to the "PCC Rules Provision Ack".

Next, the combo node (the MME 32) transmits an "Initial Context Setup Request/Attach Accept" to the eNB 21 (S18). The "Initial Context Setup Request/Attach Accept" includes the RI and the UIP that are determined by the combo node (the MME 32) and QoS information. The "Initial Context Setup Request/Attach Accept" may further include the GIPs for identifying the eNB 21 and the PGW 26 that are used to execute the NAT function.

Next, the eNB 21 notifies the UE of an "RRC Connection Reconfiguration" (S19). The "RRC Connection Reconfiguration" may include the UIP that is allocated by the MME 32 for identifying the UE. Next, the UE transmits an "RRC Connection Reconfiguration Complete" to the eNB 21 (S20). Next, the eNB 21 transmits an "Initial Context Setup Response" to the combo node (the MME 32) (S21).

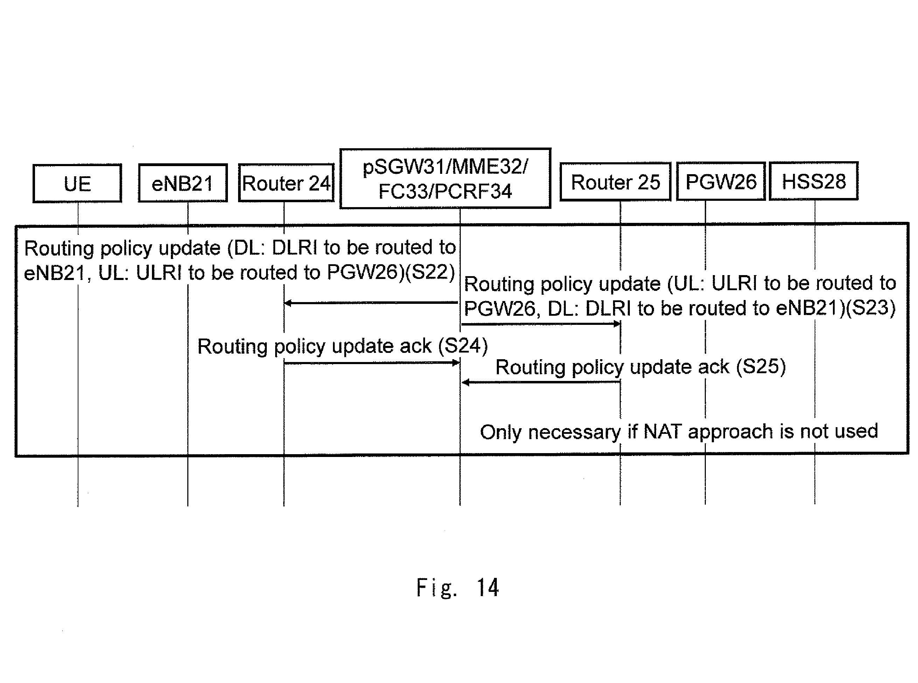

Subsequently, update processing of the routing policy by the Routers 24 and 25 when the NAT Routing is not performed shall be explained using Fig. 14. After the "Initial Context Setup Response" of Fig. 13 is transmitted to the combo node (the MME 32), the combo node (the FC 33) transmits a "Routing policy update" to the Router 24 (S22). The "Routing policy update" includes the DLRI for routing to the eNB 21 and the ULRI for routing to the PGW 26. Similarly, the combo node (the FC 33) transmits the "Routing policy update" to the Router 25 (S23). The "Routing policy update" includes the DLRI for routing to the eNB 21 and the ULRI for routing to the PGW 26. The Routers 24 and 25 transmit a "Routing policy update ack" to the combo node (the FC 33) as a response signal to the "Routing policy update" (S24 and S26).

When the NAT Routing is performed, the processing shown in Fig. 14 is not performed, and the eNB 21 executes the NAT Routing using the GIPs sent from the combo node (the FC 33) after the step S21, and the PGW 26 executes the NAT Routing using the GIPs sent from the combo node (the FC 33) after the step S17.

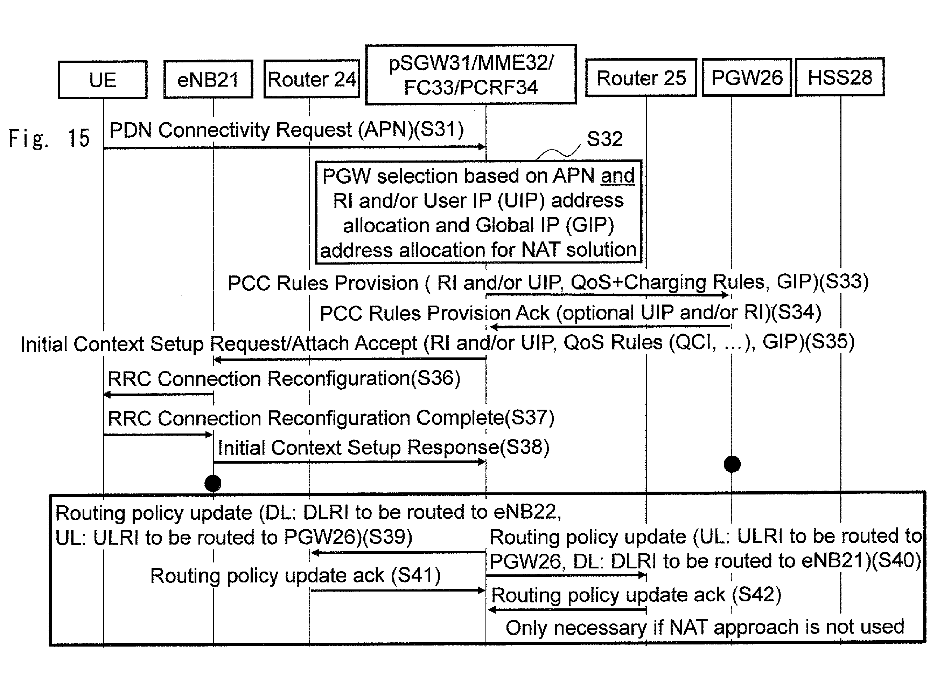

Next, a flow of processing in the case of connecting to an APN other than a default APN shall be explained using Fig. 15. The default APN is an APN that is determined to be a connection target of the UE in ATTACH. Firstly, the UE transmits a "PDN Connectivity Request" to the combo node (the MME 32) (S31). The "PDN Connectivity Request" includes the APN to which the UE wishes to be connected. As the subsequent Steps S32 to 42 are the same as Steps S15 to 25 in Figs. 13 and 14, a detailed explanation of Steps S32 to 42 shall be omitted.

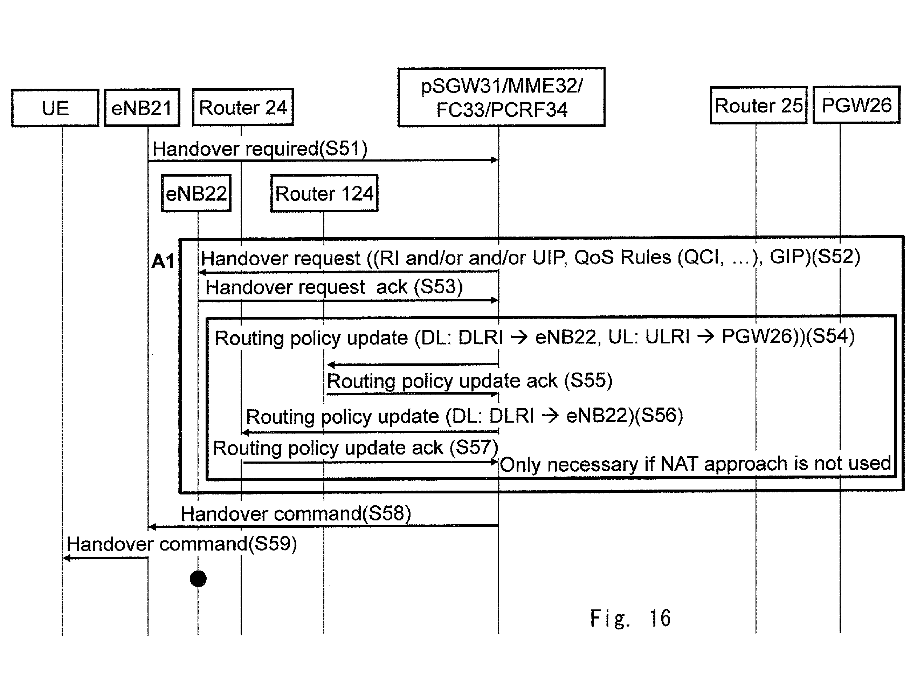

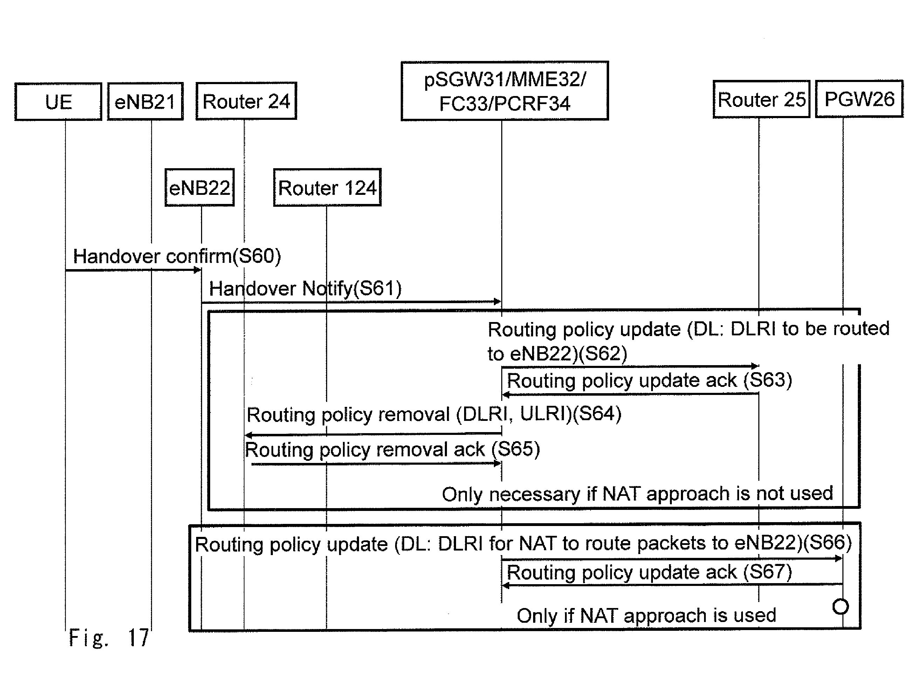

Next, a flow of path control processing at the time of handover shall be explained using Figs. 16 and 17. Figs. 16 and 17 illustrate the flow of the path control processing at the time of handover (S1 based HO) using an S1 interface. The S1 interface is an interface between the eNB and the MME. In this drawing, the eNB 21 shall be a Source eNB, while the eNB 22 shall be a Target eNB.

Firstly, the eNB 21 transmits a "Handover required" to the combo node (the MME 32) (S51). Next, the combo node (the MME 32) transmits a "Handover request" to the eNB 22, which is the Target eNB (S52). The "Handover request" may include the RI, the UIP, the QoS information and the like. Further, the "Handover request" may include the GIPs for identifying the eNB 22 and the PGW 26 that are used to execute the NAT function. Next, the eNB 22 transmits a "Handover request ack" to the combo node (the MME 32) (S53).

Next, the combo node (the FC 33) transmits the "Routing policy update" to a Router 124 which will be connected to the eNB 22 (S54). The "Routing policy update" includes the DLRI for routing to the eNB 22 and the ULRI for routing to the PGW 26. Next, the Router 124 transmits the "Routing policy update ack" to the combo node (the FC 33) (S55).

Next, when data addressed to the UE to be handed over is transmitted to the Router 24 using the DLRI sent from the combo node (the FC 33) in Step S39, the combo node (the FC 33) transmits the "Routing policy update" in order to perform control so that the data is routed to the Router 124 (S56). Next, the Router 24 transmits the "Routing policy update ack" to the combo node (the FC 33) (S57).

Next, the combo node (the FC 33) transmits a "Handover command" to the eNB 21 in order to instruct an execution of handover (S58). Further, the eNB 21 transmits the "Handover command" to the UE (S59). Steps S54 to S57 are processing that will be executed when the NAT Routing is not performed. When the NAT Routing is performed, Steps S54 to S57 will not be executed, and the eNB 22 executes the NAT Routing using the GIPs sent from the combo node (the FC 33) in Step S52 after Step S53.

Next, processing of Steps S60 onward shall be explained using Fig. 17. The UE that has received the "Handover command" transmits a "Handover confirm" to the Target eNB 22 (S60).

Next, the eNB 22 transmits a "Handover Notify" to the combo node (the MME 32) in order to notify the combo node (the MME 32) that the UE has been handed over to an area managed by the eNB 22 (S61). Next, the combo node (the FC 33) transmits the "Routing policy update" to the Router 25 (S62). The "Routing policy update" includes the DLRI for routing to the eNB 22. Next, the Router 25 transmits the "Routing policy update ack" to the combo node (the FC 33) (S63).

Next, the combo node (the FC 33) transmits a "Routing policy removal" to the Router 24 in order to notify that the DLRI and the ULRI, which are no longer necessary due to the handover of the UE, should be deleted (S64). Next, the Router 24 deletes the unnecessary DLRI and ULRI and transmits a "Routing policy removal ack" to the combo node (the FC 33) (S65). Steps S62 to S65 explain processing when the NAT Routing is not performed. The processing when the NAT Routing is performed shall be explained using Steps S66 and S67. When the NAT Routing is performed, the combo node (the MME 32) notifies the PGW 26 of the "Routing policy update" that includes the DLRI for routing to the eNB 124 (S66). Further, the PGW 26 transmits the "Routing policy update ack" to the combo node (the MME 32) (S67).

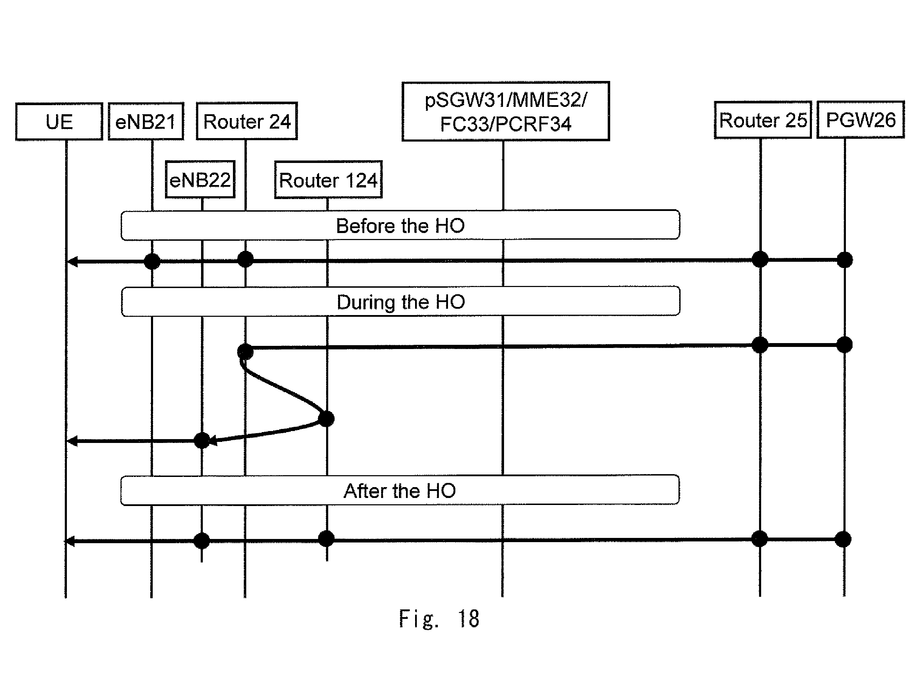

Next, a routing path of user traffic before and after handover processing and during handover shall be explained using Fig. 18. In Fig. 18, before the handover processing, the user traffic is transmitted from the PGW 26 to the UE via the Router 24 and the eNB 21. During the handover processing, the user traffic that is transmitted from the PGW 26 is transferred from the Router 24 to the Router 124 and transmitted to the UE via the Routers 24 and 124 and the eNB 22. After the handover processing, the user traffic is transmitted from the PGW 26 to the UE via the Router 124 and the eNB 22. By transferring data from the Router 24 to the Router 124 during handover in this way, it is possible to reduce packet losses to the UE.

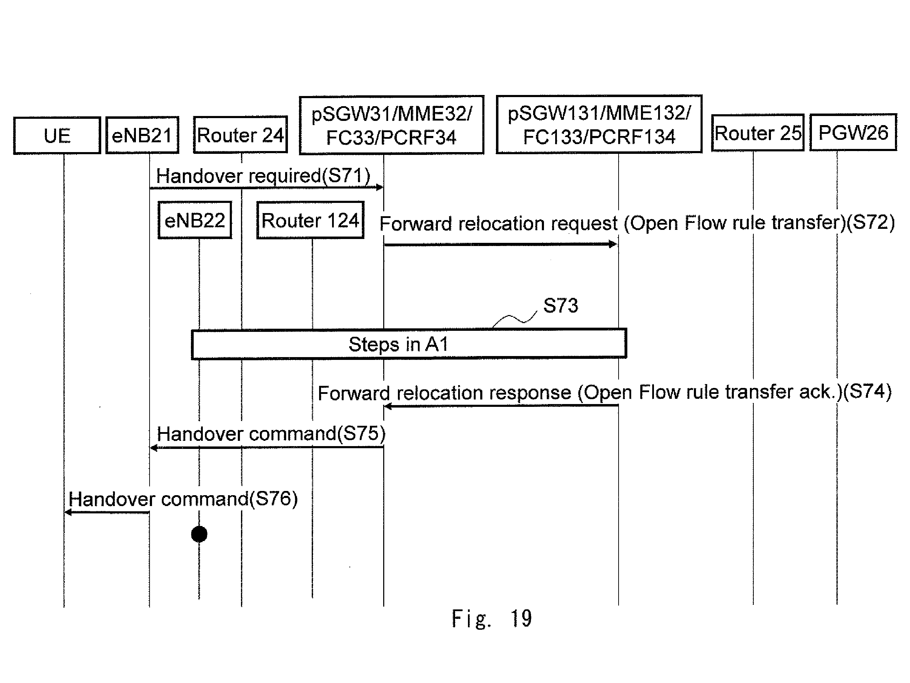

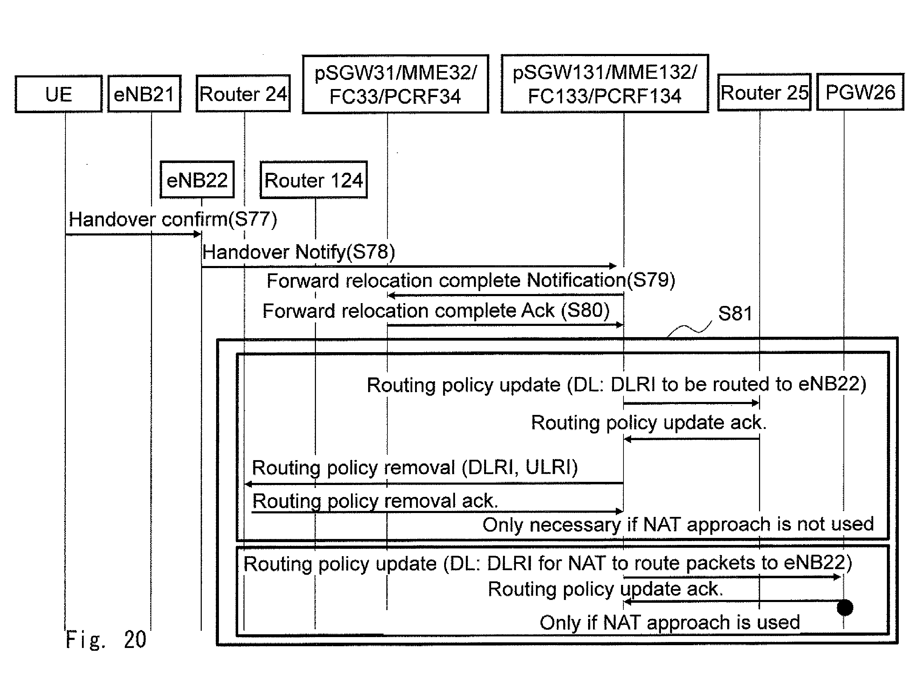

Next, a flow of the path control processing at the time of handover (S1 based HO MME change) when the MME is changed shall be explained using Figs. 19 and 20. Firstly, the eNB 21 transmits the "Handover required" to the combo node (the MME 32) (S71). When the combo node (the MME 32) transfers mobile management of the UE to another combo node (an MME 132) by the handover, the combo node (the MME 32) transmits a "Forward relocation request" to the combo node (the MME 132) (S72). The combo node that has received the "Forward relocation request" is an apparatus in which the pSGW 131, the MME 132, the FC 133, and the PCRF 134 are configured as the same apparatus. The "Forward relocation request" includes the OpenFlow rule. The OpenFlow rule is a control rule for data packets that is applied by the Routers. For example, the OpenFlow rule may be the routing policy transmitted from the combo node (the FC 33) to the Routers 24 and 124.

As Step S73 is the same as Steps S52 to S57 in Fig. 16, a detailed explanation of Step S73 shall be omitted. After Step S73, the combo node (the MME 132) transmits a "Forward relocation response" to the combo node (the MME 32) (S74).

As Steps S75 and S76 are the same as Steps S58 to S59 in Fig. 16, a detailed explanation of Steps S75 and S76 shall be omitted.

Next, processing of Step S76 onward shall be explained using Fig. 20. The UE that has received the "Handover command" transmits the "Handover confirm" to the Target eNB 22 (S77).

Next, the eNB 22 transmits the "Handover Notify" to the combo node (the MME 132) in order to notify the combo node (the MME 132) that the UE has been handed over to an area managed by the eNB 22 (S78). Next, the combo node (the MME 132) transmits a "Forward relocation complete Notification" to the combo node (the MME 32) (S79). Next, the combo node (the MME 32) transmits a "Forward relocation complete Ack" to the combo node (the MME 132) (S80). As the processing of Step S81 is the same as the processing of Steps S62 to S67 in Fig. 17, a detailed explanation of the processing of Step S81 shall be omitted.

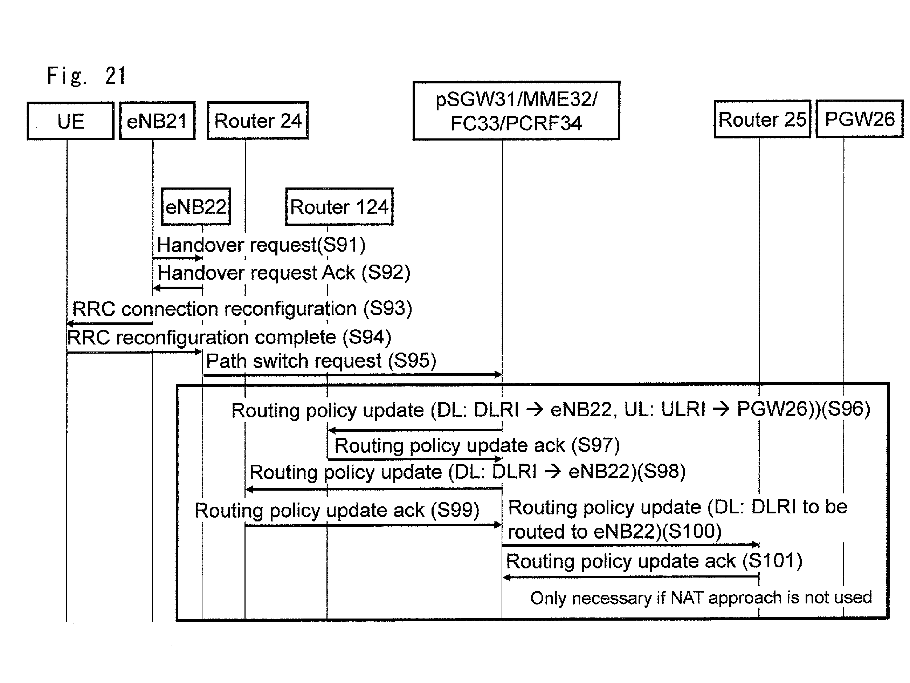

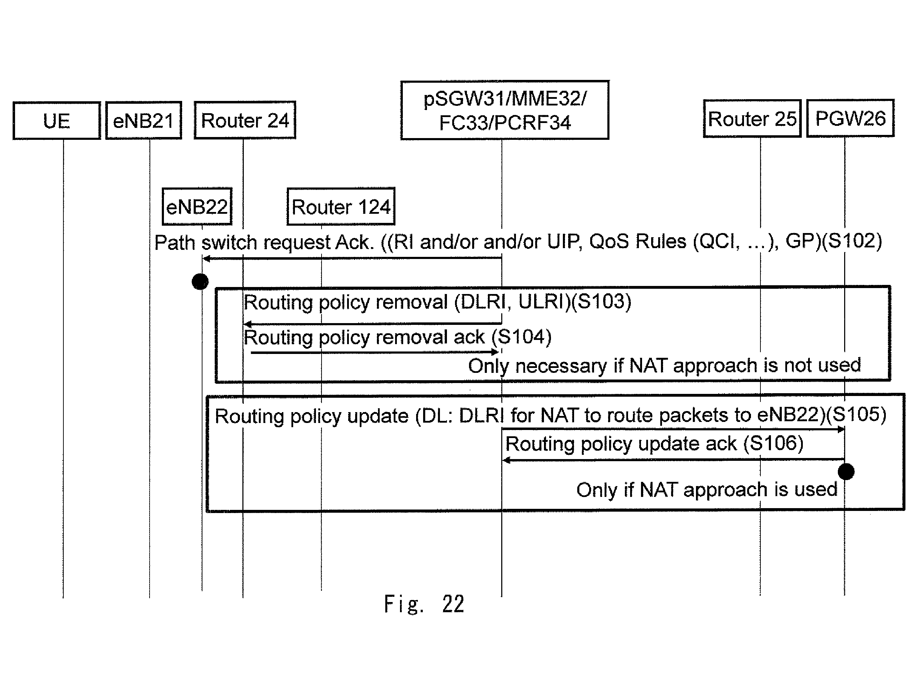

Next, a flow of the path control processing at the time of handover (X2 based HO) that is executed between eNBs shall be explained using Figs. 21 and 22. The X2 interface is an interface between eNBs that is specified by 3GPP. Firstly, the eNB 21 transmits the "Handover request" to the eNB 22, which is the Target eNB (S91). Next, the eNB 22 transmits the "Handover request Ack" to the eNB 21 (S92). Next, the eNB 21 transmits the "RRC connection reconfiguration" to the UE (S93). Next, the UE transmits an "RRC reconfiguration complete" to the eNB 22 (S94).

Next, the eNB 22 transmits a "Path switch request" to the combo node (the MME 32) (S95).
The "Path switch request" is a signal for requesting a transmission of data, which is addressed to the UE which will be handed over, to the eNB 22.

As Steps S96 to S99 are the same as Steps S54 to S57 in Fig. 16, a detailed explanation of Steps S96 to S99 shall be omitted. Further, as Steps S100 and S101 are the same as Steps S62 and S63 in Fig. 17, a detailed explanation of Steps S100 and S101 shall be omitted.

Next, processing of Step S101 onward shall be explained using Fig. 22. After Step S101, the combo node (the MME 32) transmits a "Path switch request Ack" to the eNB 22 (S102). The "Path switch request Ack" may include the RI, the UIP, the QoS information and the like. Further, the "Path switch request Ack" may include the GIPs for identifying the eNB 22 and the PGW 26 that are used to execute the NAT function.

As Steps S103 and S106 are the same as Steps S64 to S67 in Fig. 17, a detailed explanation of Steps S103 and S106 shall be omitted.

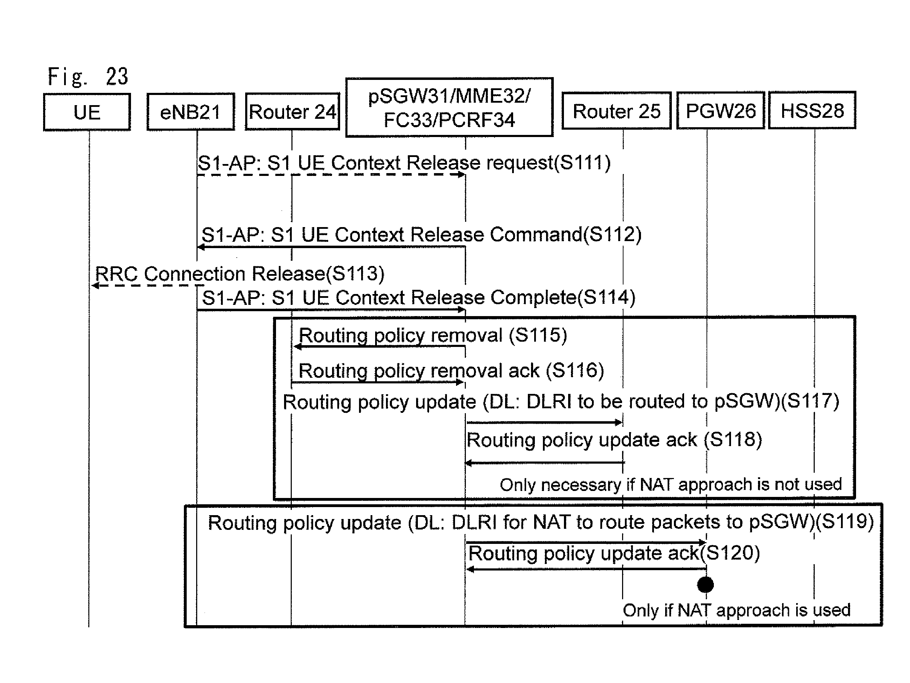

Next, a flow of processing when the UE transitions to an Idle state shall be explained using Fig. 23. Firstly, for example, when a connection between the mobile communication system and the UE is released by the transition of the UE to the Idle state, the eNB 21 transmits a "S1-AP:S1 UE Context Release request" to the combo node (the MME 32) (S111). Next, the combo node (the MME 32) transmits an "S1-AP:S1 UE Context Release Command" to the eNB 21 (S92). Next, the eNB 21 transmits an "RRC Connection Release" to the UE (S113). Next, the eNB 21 transmits an "S1-AP:S1 UE Context Release Complete" to the combo node (the MME 23) in order to notify the combo node (the MME 32) of a release of a resource with the UE (S114).

Next, the combo node (the FC 33) transmits the "Routing policy removal" to the Router 24 in order to notify the Router 24 that the unnecessary DLRI and ULRI should be deleted (S115). Next, the Router 24 deletes the unnecessary DLRI and ULRI and transmits the "Routing policy removal ack" to the combo node (the FC 33) (S116).

Next, the combo node (the FC 33) transmits the "Routing policy update" including the DLRI indicating that data addressed to UE 1 is routed to the combo node (the pSGW 31) to the Router 25 (S117). Next, the Router 25 transmits the "Routing policy update ack" to the combo node (the FC 33) (S118).

Steps S115 to S118 explain processing when the NAT Routing is not performed. The processing when the NAT Routing is performed shall be explained using Steps S 1 1 9 and S120. When the NAT Routing is performed, the combo node (the MME 32) notifies the PGW 26 of the "Routing policy update" that includes the DLRI for routing to the combo node (pSGW 31) (Q119). Further, the PGW 26 transmits the "Routing policy update ack" to the combo node (the MME 32) (S120).

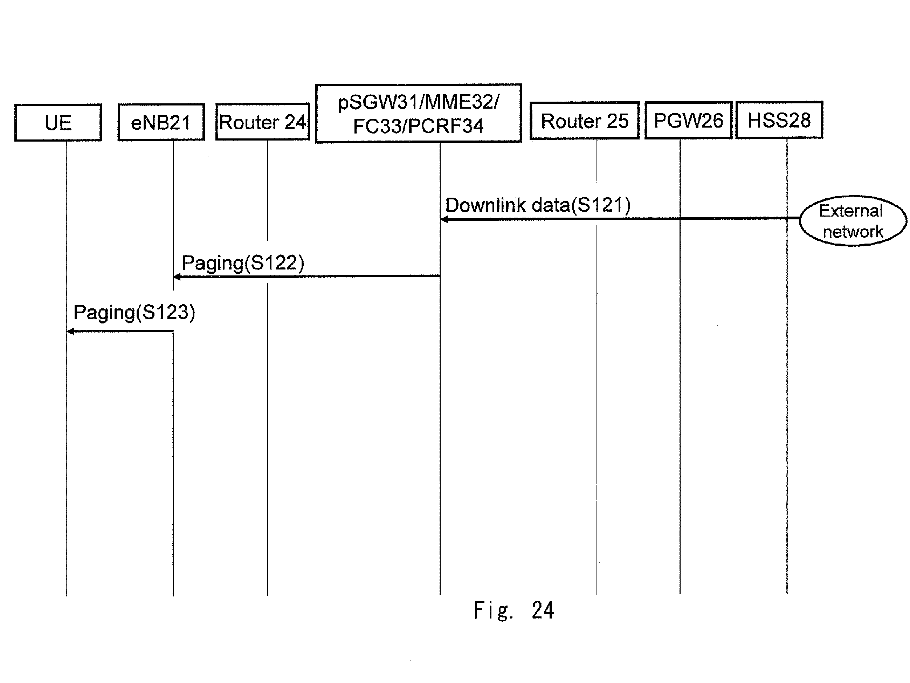

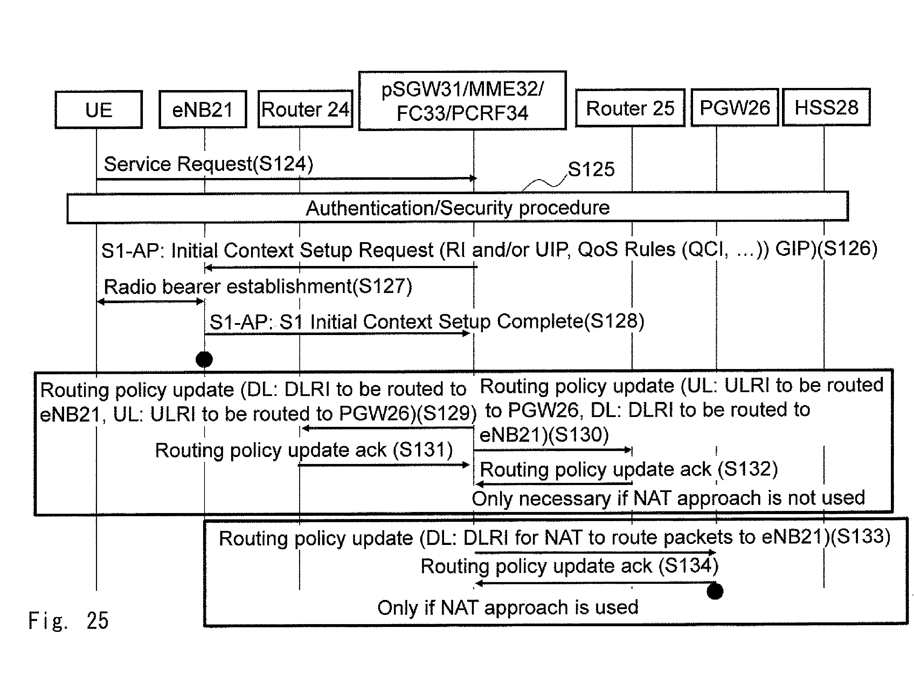

Next, a flow of NW Triggered Service Request processing when DL traffic reaches the UE from the External network shall be explained using Figs. 24 and 25. Firstly, the combo node (the MME 32 and the pSGW 31) receives Downlink Data from the PGW 26 (S121). Next, the combo node (the MME 32) transmits a Paging signal to the eNB 21 (S122). Further, the eNB 21 also transmits a Paging signal to the UE (S123).

Next, in Fig. 25, the UE transmits a "Service Request" to the combo node (the MME 32) (S124). In a related node, processing such as authentication on the UE is executed (S125).

Next, the combo node (the MME 32) transmits an "S1-AP:Initial Context Setup Request" to the eNB 21 (S126). The "S1-AP:Initial Context Setup Request" includes the RI, the UIP, the QoS information and the like. The "S1-AP:Initial Context Setup Request " may further include the GIPs for identifying the eNB 21 and the PGW 26 that are used to execute the NAT function. Next, the eNB 21 transmit a "Radio bearer establishment" to the UE (S127).

Next, the eNB 21 transmits a "S1-AP:Initial Context Setup Complete" to the combo node (the MME 32) (S128). As Steps S129 to S132 are the same as Steps S22 to S25 in Fig. 14, an explanation of Steps S129 to S132 shall be omitted. As Steps S133 and S134 are the same as Steps S66 and S67 in Fig. 17, a detailed explanation of Steps S133 and S134 shall be omitted.

As described above, by using the mobile communication system according to the first exemplary embodiment of the present invention, the routing table of the Router can be controlled using the combo node when the eNB and the PGW are connected using the Router. Further, the combo node can notify the eNB and the PGW of the routing information. Thus, the path between the UE and the Service server can be uniquely configured.

### (Second exemplary embodiment)

By configuring such a network system, it is possible to reduce packets transmitted inside the EPS, thereby realizing an efficient traffic transmission with the External network.

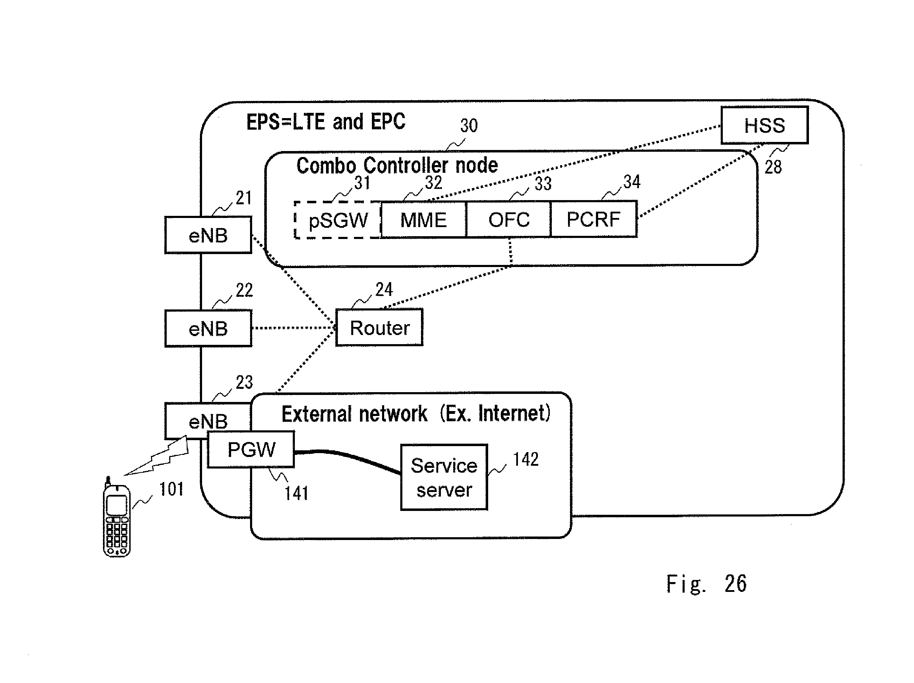

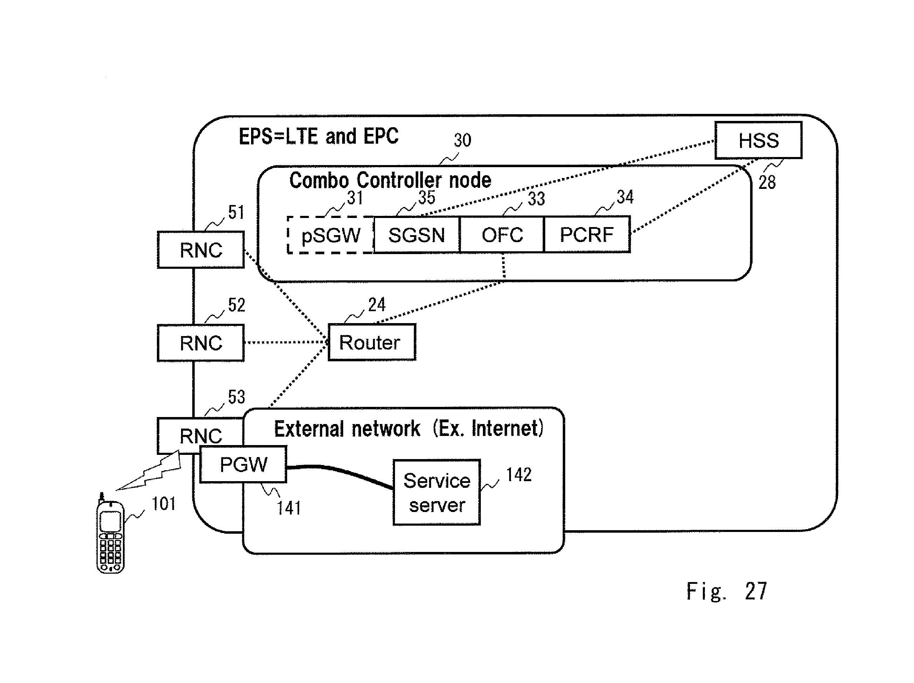

Further, a configuration example of a network system when the RNC and the GGSN are the same apparatus or disposed close to each other in terms of geography and a network topology shall be explained using Fig. 27. In Fig. 27, RNCs 51 to 53 are used in place of the eNBs 21 to 23 in Fig. 26. The remaining configuration is the same as the configuration in Fig. 26.

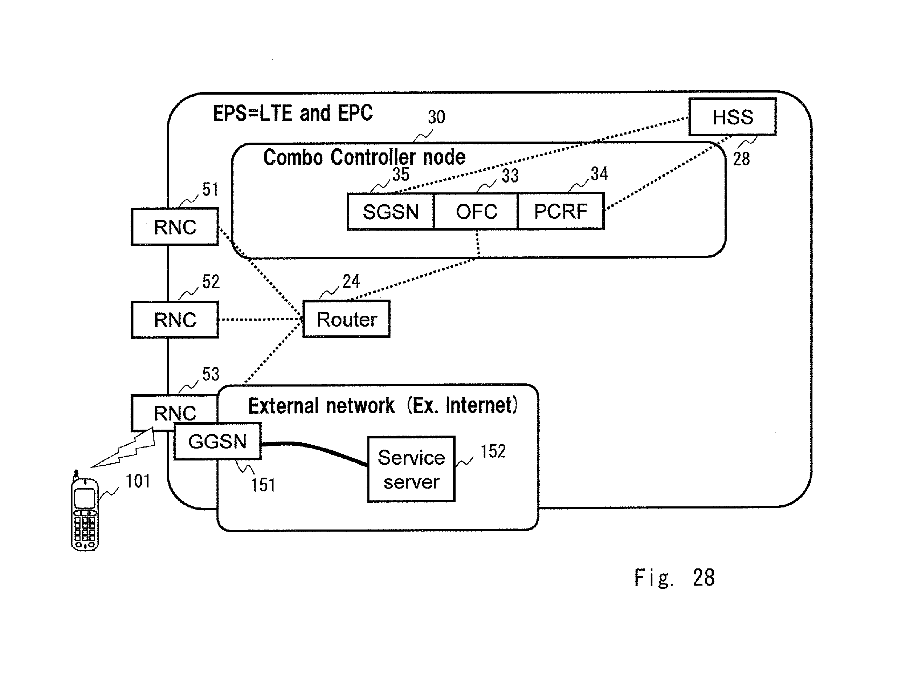

Furthermore, a configuration example of a network system when the RNC and the GGSN are the same apparatus or disposed close to each other in terms of geography and a network topology shall be explained using Fig. 28. In Fig. 28, a GGSN 151 is used in place of the PGW 141 in Fig. 27. Moreover, the combo node 30 in Fig. 28 is different from the combo node 30 in Fig. 27 in the point that the function regarding the pSGW 31 is not included. The remaining configuration is the same as the configuration in Fig. 26.

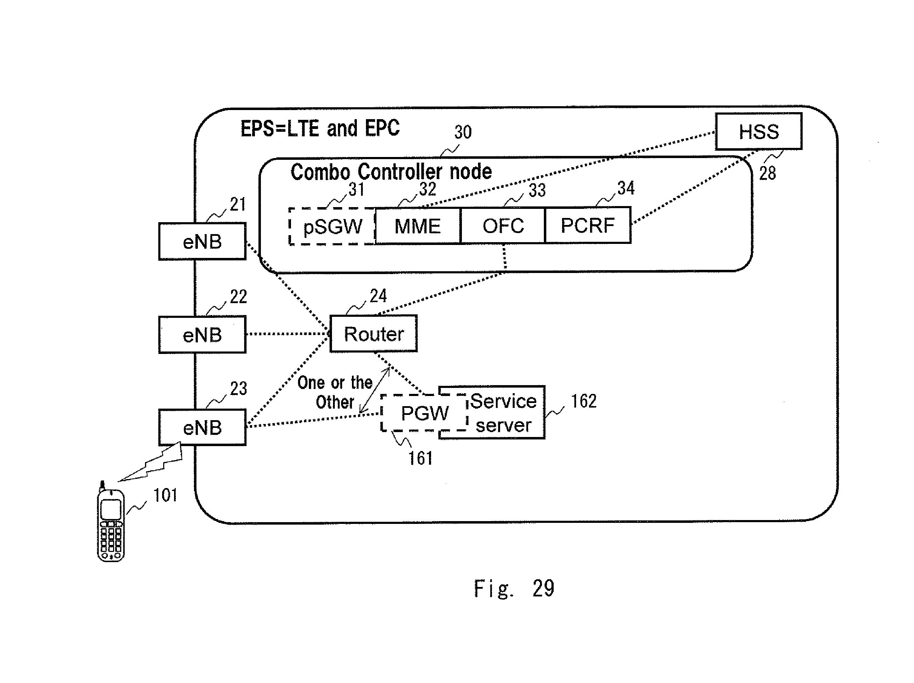

Next, a configuration example of a network system, which is different from the network system shown in Fig. 26, when the eNB and the PGW are the same apparatus or disposed close to each other in terms of geography and a network topology shall be explained using Fig. 29. Fig. 29 shows an example in which a Service server 162 is disposed inside the EPS. Further, a PGW 161 may be used as an interface for accessing the Service server 162. Moreover, in Fig. 29, the PGW may not be used to connect to the Service server 162. Specifically, the network system in Fig. 29 is different from the network system in Fig. 26 in the point that the Service server 162 is disposed inside the network system managed by a mobile communication carrier or the like instead of inside the External network. The remaining configuration is the same as the configuration in Fig. 26.

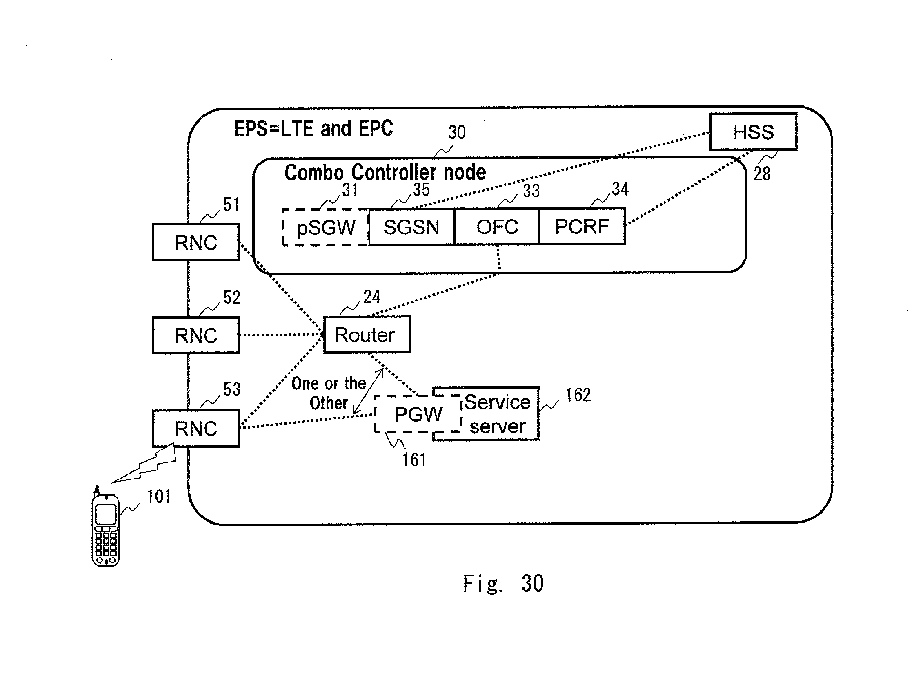

Furthermore, a configuration example of a network system, which is different from the network system shown in Fig. 27, when the RNC and the GGSN are the same apparatus or disposed close to each other in terms of geography and a network topology shall be explained using Fig. 30. Fig. 30 shows an example in which the Service server 162 is disposed inside the EPS, in a manner similar to that shown in Fig. 29. The remaining configuration is the same as the configuration in Fig. 27.

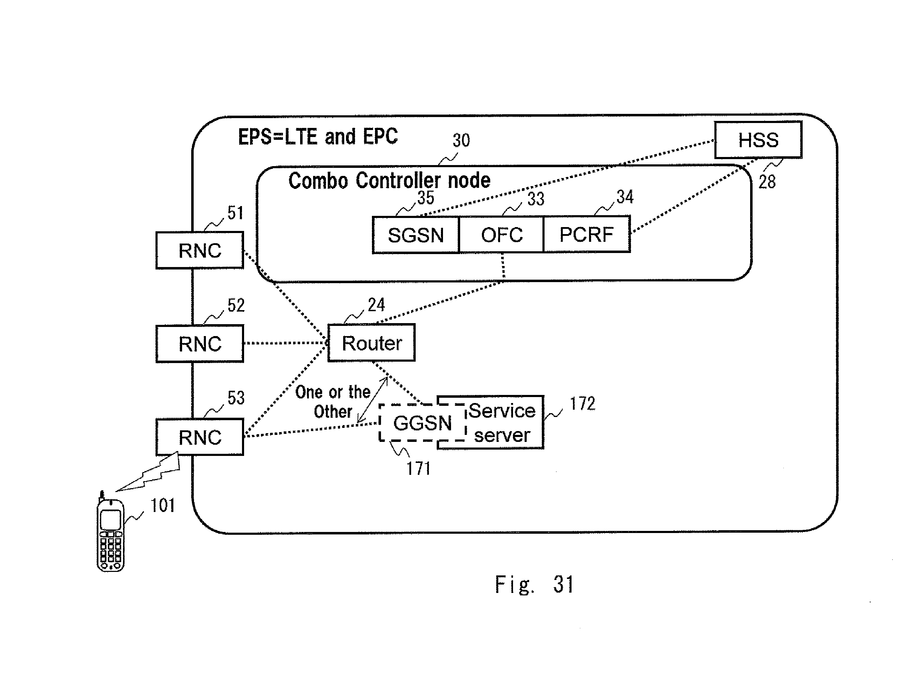

Moreover, a configuration example of a network system, which is different from the network system shown in Fig. 28, when the RNC and the GGSN are the same apparatus or disposed close to each other in terms of geography and a network topology shall be explained using Fig. 31. Fig. 31 shows an example in which the Service server 162 is disposed inside the EPS, in a manner similar to that shown in Fig. 29. The remaining configuration is the same as the configuration in Fig. 28.

Although the present invention has been explained as a configuration of hardware in the above exemplary embodiments, the present invention is not limited to this. The present invention can be realized by causing a CPU (Central Processing Unit) to execute a computer program of the processing by the combo node in Figs. 13 to 25.

In the above example, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Note that the present invention is not limited to the above exemplary embodiments, and modifications can be made without departing from the scope as appropriate.

Although the present invention has been explained with reference to the exemplary embodiments, the present invention is not limited by the above. Various modifications, obvious to those skilled in the art, can be made to the configurations and details of the present invention within the scope of the invention.

The present application claims priority rights of and is based on Japanese Patent Application No. 2012-125230 filed on May 31, 2012 in the Japanese Patent Office, the entire contents of which are hereby incorporated by reference.

### Reference Signs List

- 1: EXTERNAL NETWORK
- 2: EXTERNAL NETWORK
- 10: EPS
- 11: BASE STATION
- 12: GATEWAY
- 13: PATH CONTROL APPARATUS
- 21: eNB
- 22: eNB
- 23: eNB
- 24: ROUTER
- 25: ROUTER
- 26: PGW
- 27: PGW
- 28: HSS
- 30: COMBO NODE
- 31: pSGW
- 32: MME
- 33: FC
- 34: PCRF
- 35: SGSN
- 41: SERVICE SERVER
- 42: SERVICE SERVER
- 51 TO 53: RNC
- 61: GGSN
- 62: GGSN
- 81: ROUTER
- 82: ROUTER
- 83: ROUTER
- 101: COMMUNICATION TERMINAL

## Claims

1. A network system comprising:
a base station;
a gateway; and
path control means for controlling a communication path between the base station and the gateway, wherein
the path control means is configured to perform path control on a path between the base station and the gateway using second identification information, and
the second identification information is associated with first identification information for identifying a communication terminal that communicates with the base station and is uniquely identified inside the network system.

2. The network system according to Claim 1, wherein the second identification information is associated with the first identification information and a wireless parameter between the base station and the communication terminal.

3. The network system according to Claim 1 or 2, further comprising:
a data transfer apparatus between the base station and the gateway, wherein
the path control means notifies the base station and the gateway of the first identification information and the second identification information and also notifies the data transfer apparatus of path control information of data to which the first identification information and the second identification information is set.

4. The network system according to any one of Claims 1 to 3, wherein
the base station sets the second identification information to first data that is transmitted from the communication terminal and transmits second data, to which the second identification information is set, to the gateway, and
the gateway transmits the first data, which is the second data from which the second identification information is removed, to an external apparatus that is disposed in an external network different form the network system.

5. The network system according to any one of Claims 1 to 3, wherein
the gateway sets the second identification information to third data that is transmitted from an external apparatus disposed in an external network different from the network system and transmits fourth data, to which the second identification information is set, to the base station, and
the base station transmits the third data, which is the fourth data from which the second identification information is removed, to the communication terminal.

6. The network system according to any one of Claims 1 to 5, wherein
the path control means is configured to include a mobile control apparatus for controlling the base station and the gateway and a flow control apparatus for controlling the data transfer apparatus that is disposed between the base station and the gateway.

7. The network system according to Claim 6, further comprising:
a serving gateway for, when incoming data that is addressed to the communication terminal is generated in a state where no wireless bearer is set between the communication terminal and the base station, holding the incoming data until the wireless bearer is set between the communication terminal and the base station, wherein
the path control means is configured to include the serving gateway together with the mobile control apparatus and the flow control apparatus.

8. A network system comprising:
a base station;
a gateway;
a plurality of data transfer apparatuses for relaying data between the base station and the gateway; and
path control means for controlling a communication path between the base station and the gateway, wherein
the path control means is configured to perform path control using third identification information, and
the third identification information indicates the data transfer apparatus that is on a path between the base station and the gateway and is uniquely identified inside the network system.

9. The network system according to Claim 8, wherein the third identification information is set in such a manner that an arbitrary bit of an IP address is set as a bit for identifying the data transfer apparatus.

10. The network system according to Claim 9,
wherein
a plurality of IP addresses corresponding to a plurality of pieces of the third identification information that differs according to the passing data transfer apparatus are set to the base station and the gateway.

11. A path control apparatus for controlling a communication path between a base station and a gateway, wherein
the path control apparatus performs path control on a path between the base station and the gateway using second identification information, and
the second identification information is associated with first identification information for identifying a communication terminal that communicates with the base station and is uniquely identified inside the network system including the base station, the gateway, and the path control apparatus.

12. The path control apparatus according to Claim 11,
wherein
the second identification information is associated with the first identification information and a wireless parameter between the base station and the communication terminal.

13. The path control apparatus according to Claim 11 or 12, wherein
the path control apparatus notifies the base station and the gateway of the first identification information and the second identification information and also notifies the data transfer apparatus that is disposed between the base station and the gateway of path control information of data to which the first identification information and the second identification information is set.

14. The path control apparatus according to any one of Claims 11 to 13, wherein
the path control apparatus is configured to include a mobile control apparatus for controlling the base station and the gateway and a flow control apparatus for controlling the data transfer apparatus that is disposed between the base station and the gateway.

15. The path control apparatus according to Claim 14, wherein the path control apparatus is configured to include:
a serving gateway for, when incoming data that is addressed to the communication terminal is generated in a state where no wireless bearer is set between the communication terminal and the base station, holding the incoming data until the wireless bearer is set between the communication terminal and the base station, together with the mobile control apparatus and the flow control apparatus.

16. A path control apparatus for controlling a communication path that is composed of a plurality of data transfer apparatuses for relaying data and is between a base station and a gateway, wherein
the path control apparatus performs path control using third identification information, and
the third identification information indicates the data transfer apparatus which is on a path between the base station and the gateway and is uniquely identified inside the network system including the base station and the gateway.

17. The path control apparatus according to Claim 16,
wherein
the third identification information is set in such a manner that an arbitrary bit of an IP address is set as a bit for identifying the data transfer apparatus.

18. A path control method for controlling a base station, a gateway, and a communication path between the base station and the gateway, the path control method comprising:
performing path control on a path between the base station and the gateway using second identification information, wherein
the second identification information is associated with first identification information for identifying a communication terminal that communicates with the base station and is uniquely identified inside a network system including the base station and the gateway.

19. A path control method for controlling a communication path that is composed of a plurality of data transfer apparatuses for relaying data and is between a base station and a gateway, the path control method comprising:
performing path control on a path between the base station and the gateway using third identification information, wherein
the third identification information indicates the data transfer apparatus which is on a path between the base station and the gateway and is uniquely identified inside the network system including the base station and the gateway.

20. A non-transitory computer readable medium storing a program for causing a computer to execute control on a base station, a gateway, and a communication path between the base station and the gateway, the program comprising a step of:
performing path control on a path between the base station and the gateway using second identification information, wherein
the second identification information is associated with first identification information for identifying a communication terminal that communicates with the base station and is uniquely identified inside a network system including the base station and the gateway.

21. A non-transitory computer readable medium storing a program for causing a computer to execute control on a communication path that is composed of a plurality of data transfer apparatuses for relaying data and is between a base station and a gateway, the program comprising a step of:
performing path control on a path between the base station and the gateway using third identification information, wherein
the third identification information indicates the data transfer apparatus which is on a path between the base station and the gateway and is uniquely identified inside the network system including the base station and the gateway.
